# EUROPÄISCHE PATENTANMELDUNG

(11) **EP 1 717 648 A2**
(43) Veröffentlichungstag der Anmeldung: **02.11.2006**
(21) Anmeldenummer: 06017002.4
(22) Anmeldetag: 12.03.1999
(51) Int. Cl.: G04B 47/06

(54) **Uhr**

(30) Priorität: 13.03.1998 DE 19810915; 05.03.1999 DE 19909623
(62) Teilanmeldung aus: 99104908.1
(71) Anmelder: RICHEMONT INTERNATIONAL S.A., 1752 Villars-sur-Glâne (CH)
(72) Erfinder: Lange, Jürgen, Dr., 8200 Schaffhausen (CH); Habring, Richard, 8253 Dissenhofen (CH); Klaus, Kurt, 8200 Schaffhausen (CH); Speichinger, Ferdinand, 79798 Jestetten (CH)
(74) Vertreter: Micheli & Cie SA

(57) **Zusammenfassung**

Die Erfindung bezieht sich auf eine Uhr, insbesondere eine Taucheruhr, mit einem in einem Uhrgehäuse (12) angeordneten Uhrwerk (16), durch das über ein Stundenrohr ein Stundenzeiger (3) und über ein Minutenrohr ein Minutenzeiger (4) ein Zifferblatt (1) überstreichend antreibbar sind. Weiterhin ist eine Druckerfassungseinrichtung zum Erfassen des Umgebungsdrucks außerhalb des Uhrgehäuses (12) und eine Anzeige zum Darstellen der erfaßten Druckwerte vorhanden. Im Uhrgehäuse (12) ist ein mechanischer Druckwandler angeordnet, der von dem Umgebungsdruck außerhalb des Uhrgehäuses (12) beaufschlagbar ist und durch den ein mechanisches Tiefenmeßwerk (17) einer mechanischen Anzeige antreibbar ist.

## Beschreibung

Die Erfindung bezieht sich auf eine Uhr, insbesondere eine Taucheruhr mit einem in einem Uhrgehäuse angeordneten Uhrwerk, durch das über ein Stundenrohr ein Stundenzeiger, über ein Minutenrohr ein Minutenzeiger und gegebenenfalls ein Sekundenzeiger ein Zifferblatt überstreichend antreibbar sind, sowie mit einer Druckerfassungseinrichtung zum Erfassen des Umgebungsdrucks außerhalb des Uhrgehäuses und einer Anzeige zum

Darstellen der erfaßten Druckwerte.

Bei Taucheruhren ist es bekannt, den Umgebungsdruck mittels elektrischer oder elektronischer Sensoren zu erfassen und in einer elektronischen Auswerteeinrichtung in Signale zum Ansteuern einer Tauchtiefenanzeige umzuwandeln. Sowohl zur Erfassung als auch zur Darstellung der Umgebungsdrücke ist eine Energieversorgung durch eine Batterie erforderlich. Geht die Leistungsfähigkeit der Batterie zur Neige, entsteht die für Taucher gefährliche Situation, daß zwar noch eine gewisse Funktionsfähigkeit der Sensoren und der Anzeige gegeben ist, so daß der Benutzer davon ausgeht, eine voll funktionsfähige Taucheruhr zu haben. Aufgrund der nicht mehr ausreichenden Energieversorgung sind aber sowohl die erfaßten als auch die angezeigten Werte nicht korrekt.

Dadurch können z. B. durch tieferes Tauchen als beabsichtigt oder durch schnelleres Auftauchen als zulässig für den Taucher gesundheitsgefährdende oder sogar lebensgefährliche Situationen entstehen.

Aufgabe der Erfindung ist es daher, eine Uhr der eingangs genannten Art zu schaffen, bei der diese Nachteile bekannter Uhren vermieden werden.

Diese Aufgabe wird erfindungsgemäß dadurch gelöst, daß im Uhrgehäuse ein mechanischer Druckwandler angeordnet ist, der von dem Umgebungsdruck außerhalb des Uhrgehäuses beaufschlagbar und durch den ein mechanisches Tiefenmeßwerk einer mechanischen Anzeige antreibbar ist. Da keine der Komponenten der Uhr zur Anzeige der Tauchtiefe von einer Versorgung mit elektrischer oder mechanischer Energie abhängig ist, werden alle auf Energiereduzierung und Energieverlust beruhenden Nachteile vermieden. Die Tiefenanzeige der Uhr ist vollständig autark und somit immer betriebsbereit und voll funktionsfähig.

Das mechanische Tiefenmeßwerk kann in einer einfachen Ausführung eine Anzeigewelle aufweisen, die von dem Druckwandler drehbar antreibbar ist und einen Tiefenzeiger trägt, von dem eine Tiefenskala überstreichbar ist.

Eine geringe Baugröße wird dabei dadurch erreicht, daß die Anzeigewelle koaxial zu Stundenrohr und Minutenrohr und die Tiefenskala auf dem Zifferblatt angeordnet ist.

Entspricht die Skalenteilung der Tiefenskala der Skalenteilung der Minutenskala, so ist die Anzeige auf der Tiefenskala genauso schnell und leicht erfaßbar wie dies gewohnheitsmäßig bereits bei Minutenskalen bei

Analoguhren üblich ist.

Zu einer Baugrößenreduzierung trägt es bei, wenn die Anzeigewelle Stunden- und Minuten- und ggf. Sekundenrohr koaxial durchragt.

Der Druckwandler kann über eine Meßöffnung mit der Umgebung verbunden sein.

Ist eine Meßöffnung im Uhrgehäuse zur Verbindung des Druckwandlers mit der Umgebung manuell verschließbar ausgebildet, so kann eine Tiefenmessung bewußt nur dann erfolgen, wenn zu diesem Zweck die Messöffnung geöffnet wird. Wird die Uhr auch in anderen Bereichen benutzt, in denen wesentlich höhere Drücke herrschen, als der für den Druckwandler geeignete Meßbereich, so wird der Druckwandler durch Schließen der Meßöffnung geschützt.

Alternativ dazu kann eine Verschließeinrichtung der Meßöffnung als Druckminderventil ausgebildet sein, durch das die Meßöffnung bei Überschreiten eines bestimmten Umgebungsdrucks verschließbar ist.

In einer einfachen Ausführung kann die Meßöffnung dabei durch eine Schraubkrone manuell verschließbar sein.

Ist der mechanische Druckwandler über ein inkompressibles Medium von dem Umgebungsdruck außerhalb des Uhrgehäuses beaufschlagbar, so kann es nicht durch Verschmutzungen und aggresive Substanzen, wie z. B. auch Meerwasser, die von außen zum Druckwandler gelangen, zu dessen Beschädigung führen.

Das inkompressible Medium kann eine Flüssigkeit wie z. B. Wasser, insbesondere destilliertes Wasser oder Öl sein.

In einfacher Weise kann das inkompressible Medium durch eine bewegliche Wand vom Umgebungsdruck beaufschlagbar sein.

Ist dabei die bewegliche Wand eine Membran, die an ihrem umlaufenden Rand fest und dicht an einem. Gehäuse eingespannt ist, so wird gleichzeitig eine dichte Abtrennung des mit dem inkompressiblen Medium gefüllten Breichs von dem Umgebungsbereich erzielt.

Zu einer direkten und damit unbeeinträchtigten Übertragung des Umgebungsdrucks auf den Druckwandler führt es, wenn im Uhrgehäuse eine Meßöffnung zur Beaufschlagung des Druckwandler mit dem Umgebungsdruck ausgebildet ist, die zu einer mit dem inkompressiblen Medium gefüllten Kammer führt, deren eine Wand die vom Umgebungsdruck beaufschlagbare bewegliche Wand ist.

Eine besonders einfache und defektunanfällige Ausbildung besteht darin, daß der Druckwandler ein Ringfederdruckmesser mit einer ringförmigen Rohrfeder ist, deren eines Ende am Uhrgehäuse befestigt und mit der Meßöffnung verbunden ist und von deren radial frei verschwenkbarem anderen Ende das Tiefenmeßwerk bewegbar antreibbar ist, durch das die Schwenkbewegung des freien Endes des Rohrfeder in eine die Anzeigewelle drehbar antreibbare Bewegung übertragbar ist.

Zum Schutz gegen Überlastung kann die radiale Verschwenkbarkeit des freien Endes der Rohrfeder durch Anschläge begrenzt sein.

Vorzugsweise ist die Rohrfeder das Uhrwerk umschließend im Gehäuse angeordnet, so daß nur ein geringer Bauraum erforderlich ist. Ist dabei die Rohrfeder mit Spiel in einer Ringkammer des Uhrgehäuses angeordnet, wobei die Wände der Ringkammer die Anschläge bilden, ist bei geringer Baugröße gleichzeitig ein Schutz der Rohrfeder gegen Überlastung gegeben.

Zu einer direkten Übertragung des Umgebungsdrucks auf die Rohrfeder führt es, wenn der Innenraum der Rohrfeder über die Meßöffnung mit der Kammer verbunden und mit dem inkompressiblen Medium luftblasenfrei gefüllt ist. Dabei dient die Kammer mit der beweglichen Wand gleichzeitig als Volumenausgleichskammer für das bei Druckerhöhung durch Aufweitung der Krümmung sich vergrößernde Volumen der Rohrfeder.

Ist die bewegliche Wand durch einen manuell verschiebbaren Drücker das Volumen der Kammer verringernd beaufschlagbar, so kann durch Beaufschlagung des Drückers mit einer bestimmten Kraft eine bestimmte Tauchtiefe simuliert und so die Funktionstüchtigkkeit und Genauigkeit der Anzeige überprüft werden.

Außerdem bildet der Drücker eine Abstützfläche für die insbesondere als Membran ausgebildete bewegliche Wand.

Zur Definition der Position der beweglichen Wand bei normalem Umgebungsdruck kann die Verschiebbarkeit des Drückers in Volumenvergrößerungsrichtung der Kammer durch einen Anschlag begrenzt sein. Ist dabei der Anschlag in Verschiebungsrichtung des Drückers verstellbar einstellbar, so kann durch den Drücker eine Justage des Druckwandlers erfolgen.

Zur einfachen Montage können vorzugsweise die Kammer und/oder der Drücker in einer Krone angeordnet sein.

Da die Position des Tiefenzeigers einzig von der Position des gehäusefesten Endstücks der Rohrfeder abhängig ist, kommt es bei Luftdruckänderungen bereits zu einer Zeigerverstellung, die die tatsächliche Tauchtiefe bei einem Tauchgang verfälscht. Um unmittelbar vor einem Tauchgang den Tiefenzeiger genau auf Null einstellen zu können, kann das am Uhrgehäuse befestigte Ende der Rohrfeder radial verstellbar sein.

Dazu ist in einfacher Ausbildung das Ende der Rohrfeder über einen radial aus dem Uhrgehäuse ragenden Schaft am Uhrgehäuse befestigt, wobei der Schaft in Richtung seiner Längserstreckung verstellbar ist. Zur einfachen Verstellung des Schafts kann der Schaft in einer mit dem Uhrgehäuse fest verbundenen Kronenbuchse verschiebbar geführt sein, die mit einem Gewinde versehen ist, auf dem eine Überwurfmutter angeordnet ist, an der das freie Ende des Schafts abgestützt ist. Um eine feinfühlige Justierung zu ermöglichen, kann das Gewinde ein Feingewinde sein. Das Spiel in dem Gewinde wird dadurch beseitigt, der Schaft axial gegen die Überwurfmutter federbeaufschlagt ist.

Zur Verbindung des Inneren der Rohrfeder mit der Umgebung besitzt der Schaft eine Axialbohrung, deren eines Ende mit der Umgebung und deren anderes Ende mit dem Inneren der Rohrfeder verbunden ist.

Ist die Überwurfmutter topfförmig ausgebildet und weist einen Deckel auf, der den zur Umgebung gerichteten Mündungsbereich der Axialbohrung des Schafts abdeckt und in dem eine oder mehrere Durchgangsbohrungen geringen Querschnitts ausgebildet sind, so bildet der Deckel eine Abstützung des Schafts. Die Durchgangsbohrungen geringen Querschnitts verhindern das Eindringen von Verschmutzungen.

Das rohrfederseitige Ende des Schafts kann mit einer Querbohrung auf einer Gelenkhohlschraube schwenkbar gelagert sein, wobei die Axialbohrung des Schafts in eine Axialbohrung der Gelenkhohlschraube und die Axialbohrung der fest mit der Rohrfeder verbundenen Gelenkhohlschraube in die Rohrfeder mündet. Damit können die Relativverschwenkungen zwischen Rohrfederende und Schaft ohne Verspannungen zwischen diesen Teilen erfolgen.

Zur Ermöglichung der radialen Bewegung des Rohrfederendes bei Beaufschlagung durch den Schaft kann die Rohrfeder im Bereich der Gelenkhohlschraube an einem Ende des Schwenkarms befestigt sein, dessen anderes Ende um eine fest am Uhrgehäuse angeordnete, sich parallel zur Längsachse der Gelenkhohlschraube erstreckende Schwenkachse schwenkbar ist.

Um in einfacher Weise das mechanische Tiefenmeßwerk und den Tiefenzeiger justieren zu können, kann das mechanische Tiefenmeßwerk auf der dem Zifferblatt entgegengesetzten, durch einen öffenbaren Gehäuseboden verschließbaren Bodenseite des Uhrgehäuses angeordnet sein. Damit ist das Tiefenmeßwerk unabhängig vom Uhrwerk zugänglich.

Dabei ragt vorzugsweise die Anzeigewelle durch das Uhrwerk hindurch.

Zum Antrieb des Tiefenmeßwerks kann das freie Ende der Rohrfeder über eine Gelenkstange mit einem Zahnsegmenthebel eines Zahnsegmentes gelenkig verbunden sein, durch das ein Antriebsritzel der Anzeigewelle drehbar antreibbar ist. Die Gelenkstange ist dabei vorzugsweise mit ihrem einen Ende am freien Ende der Rohrfeder und mit ihrem anderen Ende am freien Ende des Zahnsegmenthebels angelenkt.

Um Fertigungstoleranzen der Rohrfeder ausgleichen zu können, kann die Gelenkstange längenveränderlich einstellbar sein. Dazu ist vorzugsweise die Verbindung der Gelenkstange mit dem Zahnsegmenthebel in Längserstreckung der Gelenkstange verschiebbar geführt und fixierbar.

In einfacher Weise kann dabei der Zahnsegmenthebel ein Langloch aufweisen, in das zwei Führungszapfen hineinragen, die in Längserstreckung der Gelenkstange in einem geringeren Abstand als der Länge des Langlochs voneinander an der Gelenkstange angeordnet sind, wobei eine Fixierschraube das Langloch durchragend in ein Gewindeloch im Gelenkhebel einschraubbar sowie mit ihrem Schraubenkopf der Zahnsegmenthebel gegen die Gelenkstange pressbar ist.

Zur Verstellung kann ein parallel zu den Führungszapfen am Zahnsegmenthebel drehbar angeordneter Zapfen mit einem Exenterkopf in eine Bohrung des Gelenkhebels ragen.

Greift ein schwenkbar angeordnetes federbeaufschlagtes Rückstellzahnsegment in das Antriebsritzel ein, durch das das Antriebsritzel in der Tiefenrichtung drehbar bewegbar beaufschlagt ist, so erfolgt dadurch bei einem Auftauchen nach einem Tauchgang ein sofortiges Zurückstellen des Tiefenzeigers. Gleichzeitig verbleibt das Zahnsegment mit den Zahnflanken seiner Zähne immer in der gleichen Drehrichtung in Anlage an den Zahnflanken des Antriebsritzels, so daß bei einer Umkehrung der Schwenkbewegung des Zahnsegmenthebels beim Wiederauftauchen kein Zahnspiel zu überwinden ist. Dies trägt zur Genauigkeit der Tiefenanzeige bei.

Soll auf einfache Weise auch die Maximaltiefe eines Tauchgangs angezeigt werden, so kann ein die Maximaltiefe eines Tauchgangs anzeigender Schleppzeiger durch den Druckmesser oder das Tiefenmeßwerk oder den Tiefenzeiger in Tiefenrichtung schwenkbar antreibbar sein. Bei Wiederauftauchen verbleibt dann der Schleppzeiger in der Position der größten erreichten Tauchtiefe stehen.

In einfacher Weise kann der Tiefenzeiger einen Mitnehmer aufweisen, mit dem der Tiefenzeiger am Schleppzeiger anschlagbar und diesen in Tiefenrichtung bewegbar ist. Damit ist kein besonderer Antrieb des Schleppzeigers erforderlich.

Ist der Schleppzeiger um eine zur Drehachse des Tiefenzeigers koaxiale Achse schwenkbar antreibbar, wobei in einfacher Ausbildung der Schleppzeiger auf einer Schleppzeigerwelle oder einem die Anzeigewelle umschließenden Schleppzeigerrohr angeordnet ist, so zeigen Schleppzeiger und Tiefenzeiger ihre Meßwerte auf derselben Tiefenskala an.

Damit der Schleppzeiger nach Anzeige einer Maximaltiefe wieder in seine Normalstellung sich bewegen kann, kann die Schwenkbewegung des Schleppzeigers entgegen der Tiefenrichtung durch eine lösbare Sperre sperrbar sein. Dabei ist in einfacher Ausbildung die Schwenkbewegung des Schleppzeigers durch eine Klinkensperre sperrbar.

Die Schleppzeigerwelle oder das Schleppzeigerrohr können eine Rastscheibe mit einer radial umlaufend angeordneten Zahnreihe aufweisen, in deren Zahnlücken eine Rastklinke entgegen der Tiefenrichtung sperrend eingreifbar ist.

In einfacher Weise kann dazu die Rastscheibe an ihrem radial umlaufenden Rand mit einer Sägezahnreihe ausgebildet sein, deren Zähne entgegen der Tiefendrehrichtung des Schleppzeigers gerichtet sind.

Zur Leichtgängigkeit der Rastklinke kann die Rastklinke um eine

Schwenkachse schwenkbar sein.

Um den Schleppzeiger zurückstellen zu können, kann die Rastklinke in Entsperrichtung manuell beaufschlagbar sein, wobei dies in einfacher Ausbildung dadurch möglich ist, daß die Rastklinke von einem Betätigungsschieber in Entsperrichtung beaufschlagbar ist, der mit seinem einen Ende manuell beaufschlagbar aus dem Uhrgehäuse ragt oder durch einen Drücker manuell beaufschlagbar ist. Damit ist eine leichte und schnelle Rückstellung des Schleppzeigers möglich. Zur Definition der Stellung des nichtbetätigenden Sperrschiebers kann der Entsperrschieber entgegen der

Beaufschlagungsrichtung der Rastklinke federbeaufschlagt sein.

Ist der Schleppzeiger federnd entgegen der Tiefenrichtung gegen den Tiefenzeiger vorgespannt, so stellt er sich nach Lösen der Sperre selbsttätig wieder bis zum Anschlag am Tiefenzeiger zurück. In einfacher Bauraum sparender Weise kann dazu eine die Anzeigewelle umschließende vorgespannte Spiralfeder mit ihrem einen Ende an der Anzeigewelle und mit ihrem anderen Ende an der Schleppzeigerwelle oder dem Schleppzeigerrohr oder der Rastscheibe fest angeordnet sein.

Um eine bremsende Beaufschlagung der Rastscheibe durch die Rastklinke und damit eine ruckartige Bewegung des Schleppzeigers zu vermeiden, kann an jedem Hebelarm eines frei um eine zur Drehachse der Rastscheibe parallele Schwenkachse schwenkbarenen zweiarmigen Hebels in Umfangsrichtung der Rastscheibe im Abstand voneinander jeweils eine Rastklinke angeordnet sein, wobei bei Drehung der Rastscheibe in Tiefenrichtung die Rastnase der einen Rastklinke entlang einer Zahnflanke gleitend aus einer Zahnlücke der Sägezahnreihe herausbewegbar und dadurch der zweiarmige Hebel derart schwenkbar ist, daß dabei die Rastnase der anderen Rastklinke in eine Zahnlücke der Sägezahnreihe hineinbewegbar ist.

Zum einfachen Auskuppeln beider Rastklinken nach einem Tauchgang kann der Betätigungsschieber etwa radial zur Drehachse der Rastscheibe verschiebbar geführt sein und die Schwenkachse des zweiarmigen Hebels tragen.

Ausführungsbeispiele der Erfindung sind in der Zeichnung dargestellt und werden im folgenden näher beschrieben.

Es zeigen:
- Figur 1: eine Draufsicht einer Taucheruhr,
- Figur 2: einen Querschnitt der Taucheruhr nach Figur 1
- Figur 3: eine Seitenansicht des Uhrwerks der Taucheruhr nach Figur 1, mit einem Tiefenmeßwerk im Querschnitt,
- Figur 4: eine Draufsicht des Tiefenmeßwerks nach Figur 3,
- Figur 5: das Tiefenmeßwerk nach Figur 4 ohne Ringfederdruckmesser in Explosionsdarstellung,
- Figur 6: die Baugruppe der Anzeigewelle des Tiefenmeßwerks nach Figur 5,
- Figur 7: einen ausschnittsweisen Querschnitt der Taucheruhr nach Figur 1 im Bereich der Schraubkrone in deren Schließstellung,
- Figur 8: den ausschnittsweisen Querschnitt nach Figur 7 in Offenstellung der Schraubkrone,
- Figur 9: einen ausschnittsweisen Querschnitt der Taucheruhr nach Figur 1 im Bereich einer Drückerkrone,
- Figur 10: einen ausschnittsweisen Querschnitt eines weiteren Ausführungsbeispiels einer Taucheruhr im Bereich einer Krone in Umgebungsdruckposition,
- Figur 11: die Krone nach Figur 10 in Druckbeaufschlagungsposition,
- Figur 12: die Krone nach Figur 10 in manueller Beaufschlagungsposition,
- Figur 13: ein weiteres Ausführungsbeispiel einer Gelenkstange der Taucheruhr nach Figur 1,
- Figur 14: eine perspektivische Ansicht eines weiteren Ausführungsbeispiels eines Tiefenmeßwerks einer Taucheruhr nach Figur 1,
- Figur 15: eine Ansicht eines Ausschnitts des Tiefenmeßwerks nach Figur 14 im Bereich der Rastklinken der Rastscheibe,
- Figur 16: einen Querschnitt einer Krone zur Umgebungsdruckbeaufschlagung einer Rohrfeder für eine Taucheruhr nach Figur 1,

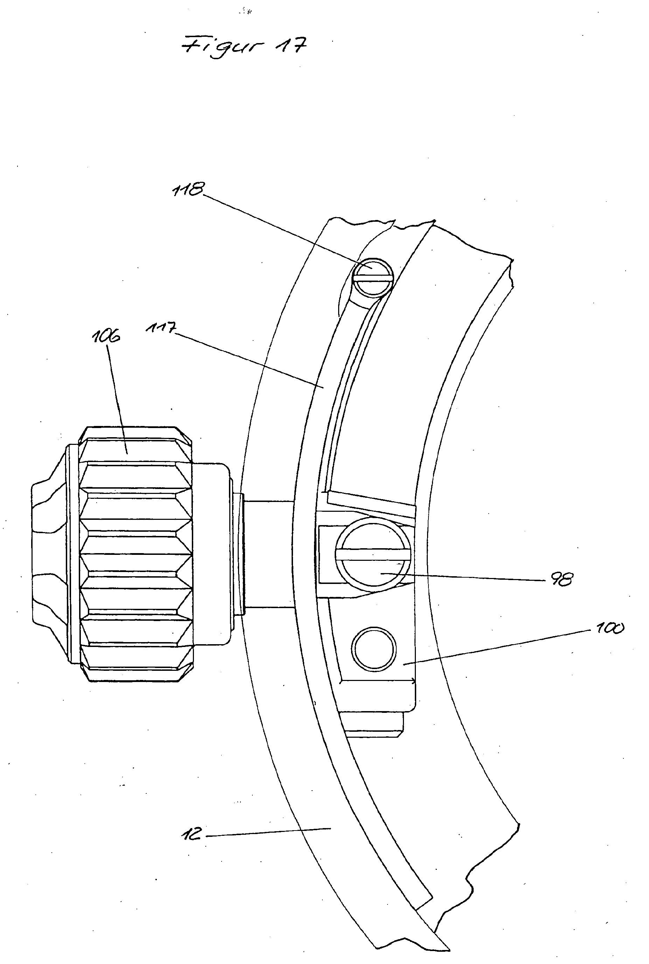

- Figur 17: eine Ansicht der mit einem Rohrfederende verbundenen Krone nach Figur 16,

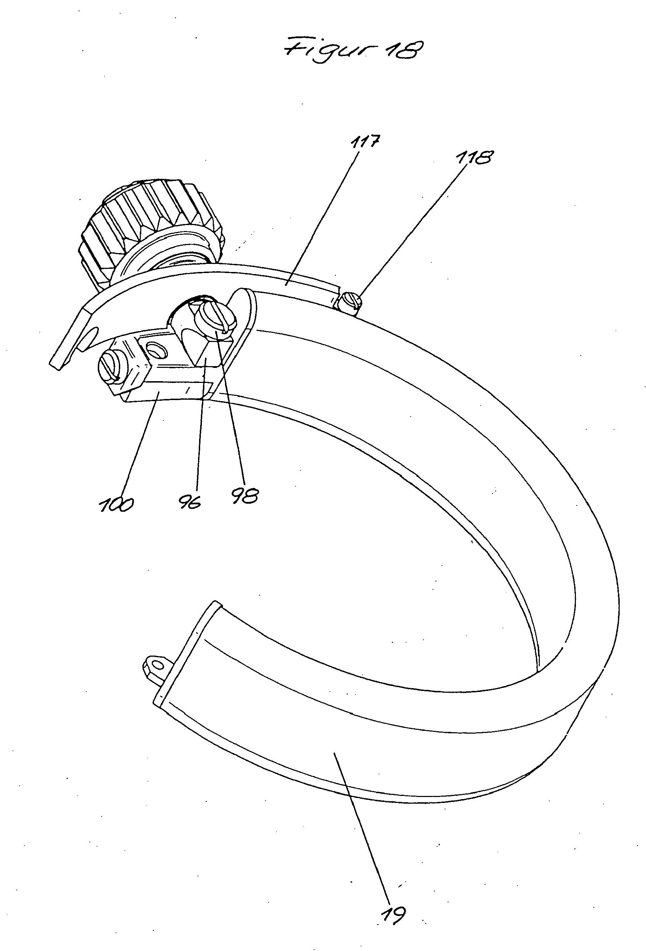

- Figur 18: eine perspektivische Ansicht von Krone und Rohrfeder nach Figur 16,

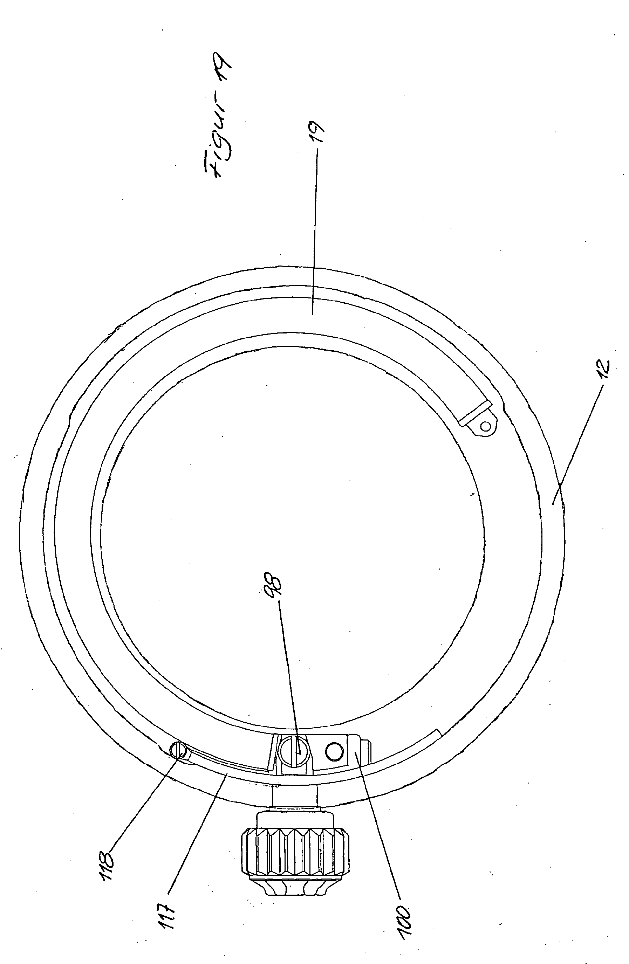

- Figur 19: eine Draufsicht von Krone und Rohrfeder nach Figur 16 in einem Uhrgehäuse.

Die in den Figuren dargestellte Taucheruhr besitzt ein Zifferblatt 1 mit einer ringförmigen Stunden- und Minutenskala 2, der ein Stundenzeiger 3 und ein Minutenzeiger 4 zugeordnet sind. Die Stunden- und Minutenskala 2 ist von einem drehbar einstellbaren Tauchzeiteinstellring 8 umschlossen, der durch eine Drückerkrone 9 einstellbar ist. Der Tauchzeiteinstellring 8 ist wiederum von einer Tiefenskala 5 umschlossen, der ein Tiefenzeiger 6 und ein Schleppzeiger 7 zugeordnet sind.

Die Skalenteilungen der Stunden- und Minutenskala 2 und der Tiefenskala 5 entsprechen sich, wobei sich die Tiefenskala 5 von der 12-Uhr-Position bis zur 9-Uhr-Position erstreckt.

Zum Auslösen einer Rückstellbewegung des Schleppzeigers 7 dient auch die Drückerkrone 9 und zur Druckbeaufschlagung eines Druckwandlers ist eine Schraubkrone 11 vorhanden. Eine verschraubte Krone 10 dient zur Einstellung der Zeitzeiger und zum manuellen Aufziehen des automatischen Uhrwerks.

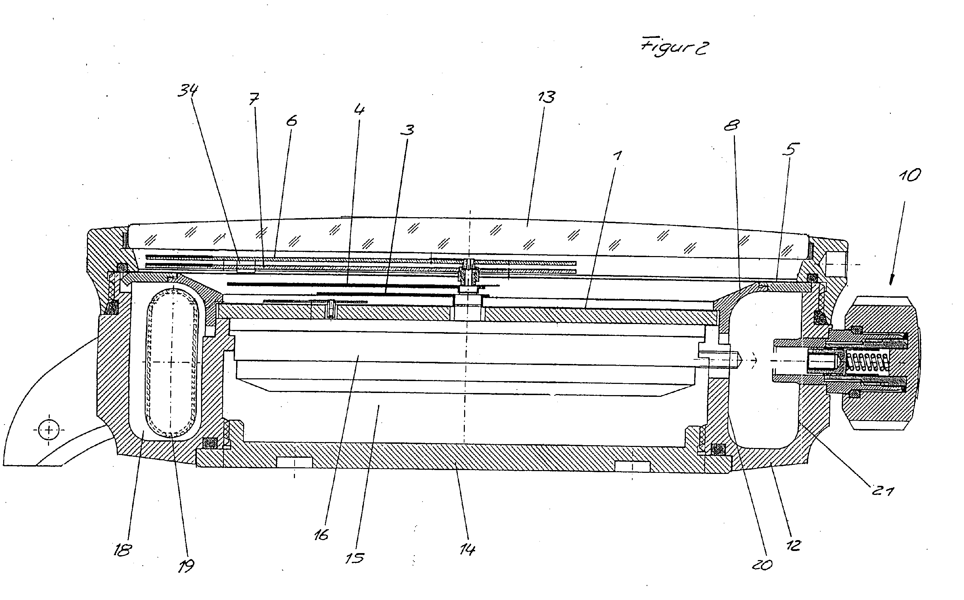

In Figur 2 ist die Taucheruhr im Querschnitt dargestellt, wobei das Uhrgehäuse 12 beobachterseitig durch ein Deckglas 13 und bodenseitig durch einen einschraubbaren Gehäuseboden 14 verschlossen ist. Das Uhrgehäuse 12 ist mit einer topfartigen Öffnung 15 versehen, in der ein Uhrwerk 16 zum Antrieb der Zeitzeiger der Uhr angeordnet ist. In dem bodenseitigen freien Raum unter dem Uhrwerk 16 ist ein in dieser Figur nicht dargestelltes Tiefenmeßwerk 17 anordenbar.

Die topfförmige Öffnung 15 ist von einer Ringkammer 18 des Uhrgehäuses 12 umschlossen, in dem eine Rohrfeder 19 eines Ringfederdruckmessers mit radialer Bewegungsmöglichkeit angeordnet ist. Die Seitenwände 20 und 21 der Ringkammer 18 bilden Anschläge zum Begrenzen der radialen Auslenkung der Rohrfeder 19. Zum Einstellen der Zeitzeiger über das Uhrwerk 16 dient die im Schnitt dargestellte Krone 10.

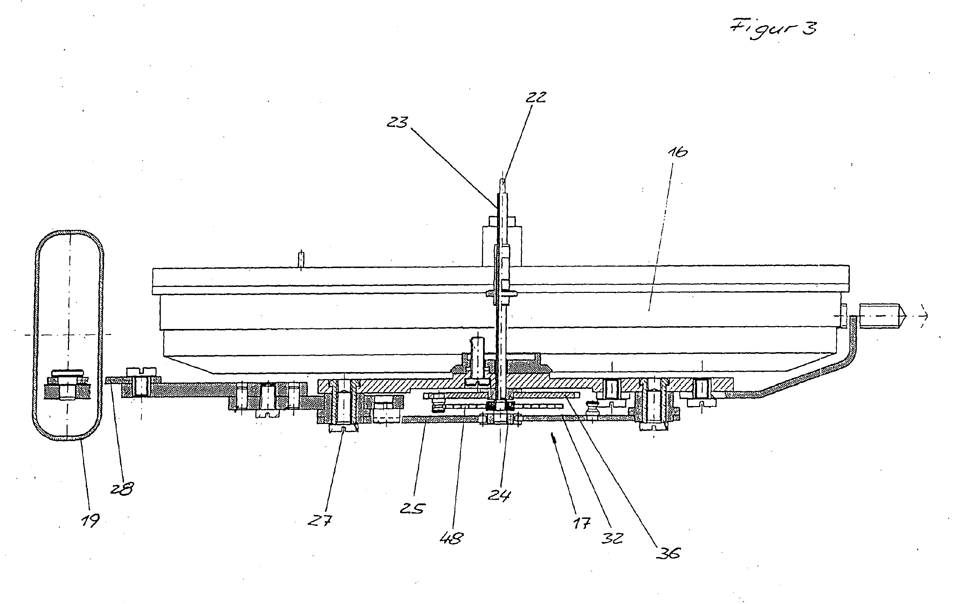

In Figur 3 sind in Einbaulage übereinander das Uhrwerk 16 und das Tiefenmeßwerk 17 angeordnet, wobei das Tiefenmeßwerk 17 im Schnitt dargestellt ist. Dabei ist zu erkennen, daß eine Anzeigewelle 22 und ein die Anzeigewelle 22 umschließendes Schleppzeigerrohr 23 des Tiefenmeßwerks 17 durch das Uhrwerk 16 hindurchgeführt sind.

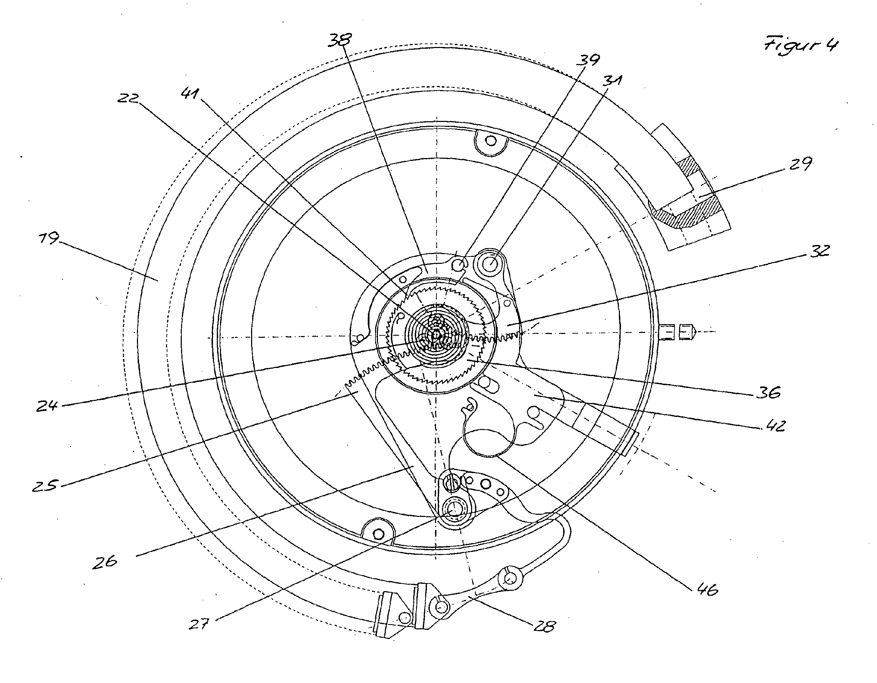

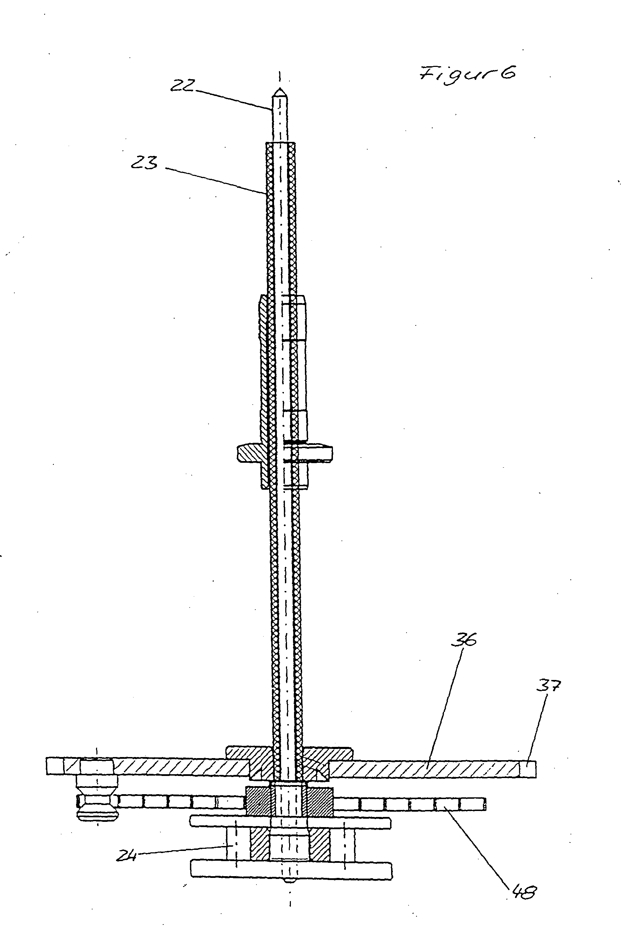

Wie auch den weiteren Figuren 4 bis 6 zu entnehmen ist, ist auf dem unteren Ende der Anzeigewelle 22 ein Antriebsritzel 24 angeordnet, in das ein Zahnsegment 25 eingreift. Das Zahnsegment 25 weist einen Zahnsegmenthebel 26 auf, der an seinem dem Zahnsegment 25 entgegengesetzten Ende um eine Schwenkachse 27 schwenkbar gelagert ist. An dem Zahnsegmenthebel 25, der zweiteilig ausgebildet ist, ist eine Gelenkstange 28 mit ihrem einen Ende angelenkt, während sie mit ihrem anderen Ende an dem freien Ende der Rohrfeder 19 angelenkt ist.

Diese an ihrem freien Ende geschlossene Rohrfeder 19 ist mit ihrem anderen Ende am Uhrgehäuse 12 befestigt und über eine Verbindungsöffnung 29 mit einer Meßöffnung 30 verbunden, über die die Rohrfeder 19 mit dem Umgebungsdruck außerhalb des Uhrgehäuses 12 verbindbar ist. Entsprechend diesem Umgebungsdruck ist die Rohrfeder 19 in ihrer Krümmung änderbar, was in Figur 4 durch die Darstellung der Rohrfeder 19 mit durchgezogener und mit unterbrochener Linie gezeigt ist. Bei Erhöhung des Umgebungsdrucks weitet sich die Krümmung der Rohrfeder 19 auf und erzeugt über die Gelenkstange 28 ein Verschwenken des Zahnsegments 25 um die Schwenkachse 27. Dies bewirkt über das Antriebsritzel 24 ein Verdrehen der Anzeigewelle 22 und damit ein Verschwenken des am oberen Ende der Anzeigewelle 22 angeordneten nicht dargestellten Tiefenzeigers 6. Somit zeigt der Tiefenzeiger 6 auf der Tiefenskala 5 die momentane Tauchtiefe an.

Ein um eine Schwenkachse 31 schwenkbares Rückstellzahnsegment 32 greift ebenfalls in das Antriebsritzel 24 ein. Mittels einer das Rückstellzahnsegment 32 beaufschlagenden Rückstellfeder 33 ist das Antriebsritzel 24 in Tiefenrichtung beaufschlagt, so daß bei Abfall des Umgebungsdrucks durch Auftauchen das Antriebsritzel 24 und damit der Tiefenzeiger 6 zum Beginn der Tiefenskala 5 verschwenkt wird. Weiterhin wird durch die Rückstellfeder 33 und das Rückstellsegment 32 dafür gesorgt, daß das Zahnsegment 25 immer in der gleichen Richtung an den Zähnen des Antriebsritzels 24 in Anlage ist, so daß kein Zahnspiel entsteht.

Wie in Figur 2 zu erkennen ist, weist der Tiefenzeiger 6 einen als Anschlag ausgebildeten Mitnehmer 34 auf, der bei Bewegung des Tiefenzeigers 6 in Tiefenrichtung 35 - d.h. in Richtung größere Tauchtiefe - am Schleppzeiger 7 in Anlage ist und diesen in Tiefenrichtung 35 mitnimmt. In umgekehrter Bewegungsrichtung des Tiefenzeigers 6 bleibt der Schleppzeiger 7 in seiner maximal tiefsten Lage, in der er durch den Tiegenzeiger 6 bewegt wurde. Damit zeigt der Schleppzeiger 7 die größte Tauchtiefe eines Tauchgangs an. Der Schleppzeiger 7 ist an dem Schleppzeigerrohr 23 angeordnet, das die Anzeigewelle 22 umschließt und ebenfalls durch das Uhrwerk 16 hindurchragt.

An dem dem Schleppzeiger 7 entgegengesetzten Ende weist das Schleppzeigerrohr 23 eine kreisförmige Rastscheibe 36 auf, die an ihrem radial umlaufenden Rand mit einer Sägezahnreihe 37 versehen ist. Die radial gerichteten Zähne der Sägezahnreihe 37 sind entgegen der Tiefendrehrichtung des Schleppzeigers 7 gerichtet. In die Zahnlücken der Zähne der Sägezahnreihe 37 ist eine Rastklinke 38 einrastbar, die um eine zum Schleppzeigerrohr 23 parallele Schwenkachse 39 schwenkbar ist und durch einen mit der Rastklinke 38 einteilig ausgebildeten und vorgespannt an einem gehäusefesten Bauteil abgestützten Federarm 40 mit ihrer Rastnase 41 gegen die Sägezahnreihe 37 beaufschlagt ist.

Damit kann sich der Schleppzeiger 7 in Tiefenrichtung 35 ungehindert zusammen mit dem Tiefenzeiger 6 verschwenken. Bewegt sich dann der Tiefenzeiger 6 wieder zurück, wird der Schleppzeiger 7 durch die in einer Zahnlücke der Sägezahnreihe 34 eingerastete und ein Zurückbewegen des

Schleppzeigers 7 sperrende Rastklinke 38 in seiner Position gehalten.

Um aber auch eine Rückstellung des Schleppzeigers 7 zu ermöglichen, ist eine manuell betätigbare Entsperreinrichtung vorhanden. Diese besteht aus einem Betätigungsschieber 42, der radial zum Schleppzeigerrohr 35 verschiebbar geführt ist und durch dessen eines Ende 42 die Rastklinke 38 derart schwenkbar beaufschlagbar ist, daß diese ihre Rastnase 41 aus der Sägezahnreihe 37 heraushebt. Der Betätigungsschieber 42 weist zwei sich in Bewegungsrichtung erstreckende Nuten 44 auf, in die fest angeordnete Führungszapfen 45 ragen. Dadurch erfolgt die radiale Führung des

Betätigungsschiebers 42.

Der Betätigungsschieber 42 ist in Normalstellung, in der der Betätigungsschieber 42 außer Eingriff von der Rastklinke 38 ist, durch einen vorgespannten Federarm 46 vorgespannt, der einteilig mit dem Betätigungsschieber 42 ausgebildet und an einem gehäusefesten Bauteil abgestützt ist.

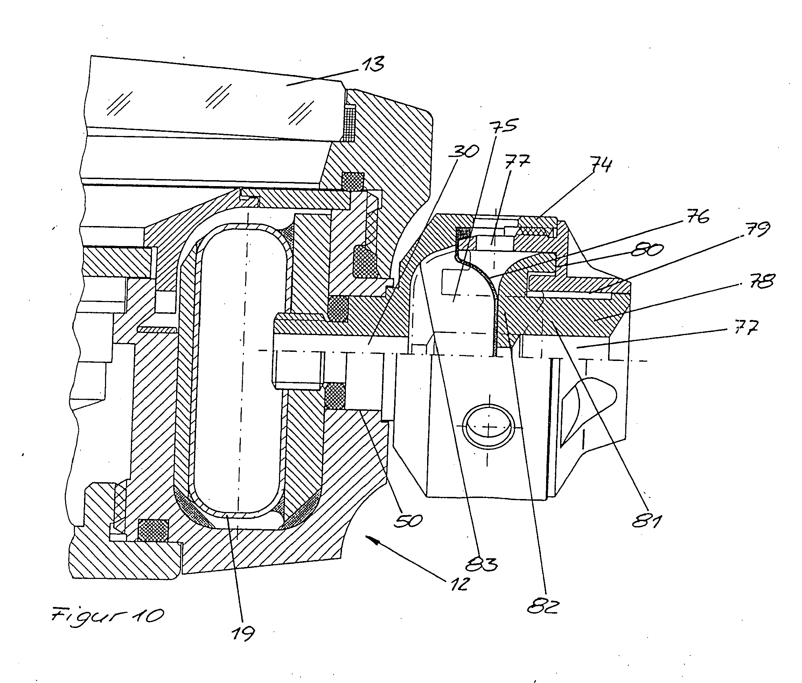

Das der Rastklinke 38 entgegengesetzte Ende des Betätigungsschiebers 42 ist durch den Drückerschacht 47 der in Figur 9 dargestellten Drückerkrone 9 verschiebbar beaufschlagbar.

Damit der Schleppzeiger 7 bei Entsperrung der Rastscheibe 36 sich auch entgegen der Tiefenrichtung bewegt, ist eine die Anzeigewelle 22 umschließende entsprechend vorgespannte Spiralfeder 48 vorhanden, die mit ihrem inneren Ende an der Anzeigewelle 22 und mit ihrem äußeren Ende an der Rastscheibe 36 befestigt ist.

Wie in den Figuren 4, 7 und 8 zu sehen ist , weist die Rohrfeder 19 an ihrem am Uhrgehäuse 12 befestigten Ende ein Halteteil 49 auf, mit dem es an dem Uhrgehäuse 12 befestigt ist. Über die Mündungsöffnung der Rohrfeder 19 ist deren Innenraum mit der radial nach außen mündenden Verbindungsöffnung 29 des Halteteils 49 verbunden, die wiederum zu der Meßöffnung 30 der Schraubkrone 11 führt.

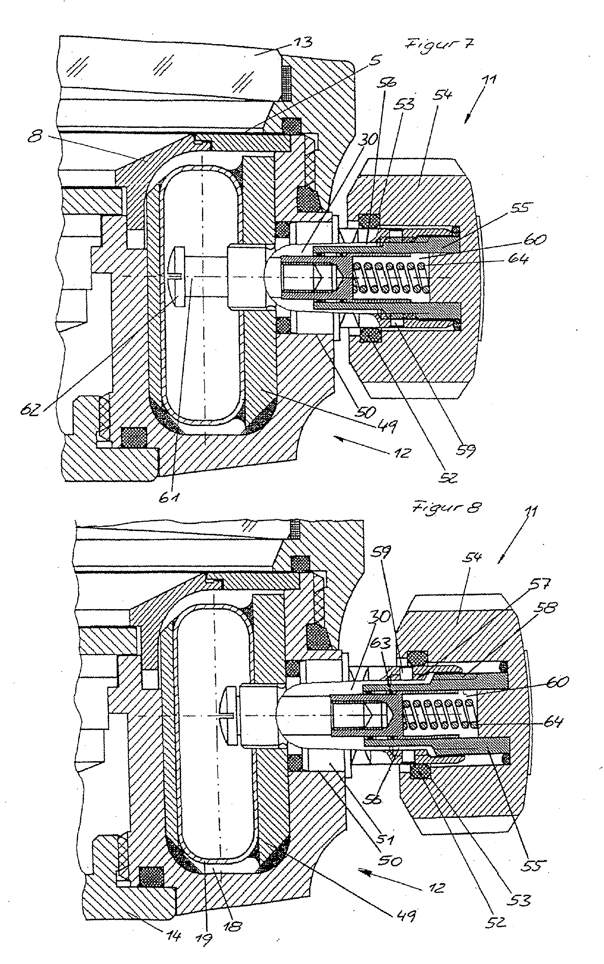

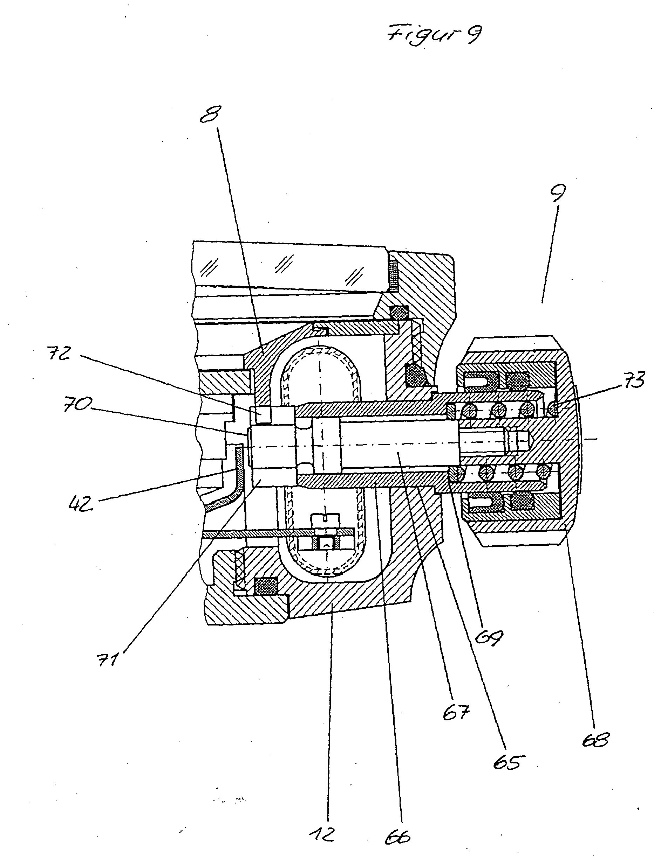

Die Schraubkrone 11 ist in Figur 7 in Schließstellung und in Figur 8 in Öffnungsstellung dargestellt. In einer radial durchgehenden Gehäuseöffnung 50 ist ein radial nach außen hervorstehender Führungsschaft 51 dicht eingesetzt, der mit der axial durchgehenden Meßöffnung 30 versehen ist. Dabei bildet die radial umlaufende äußere Mantelfläche des Führungsschafts 51 eine Gleitfläche, auf der ein den Führungsschaft 51 umschließender Dichtring 52 sowohl axial als auch in Umfangsrichtung verschiebbar sitzt.

Der Dichtring 52 sitzt mit seinem radial äußeren Bereich in einer Ringnut 53 eines den Führungsschaft 51 topfartig übergreifenden Kronenkopfs 54. Der Kronenkopf 54 weist einen mittigen Zapfen 55 auf, der in die Meßöffnung 30 hineinragt. In dem freien Endbereich des Zapfens 55 ist ein Ringspalt 56 zwischen dem Zapfen 55 und der Wand der Meßöffnung 30 gebildet, während am freien Endbereich des Führungsschafts 51 die Meßöffnung 30 mit einem Innengewinde 57 versehen ist, in das der Zapfen 55 mit einem Außengewinde 58 in dem den Kronenkopf 54 näheren Bereich einschraubbar ist. Durch Verdrehen des Kronenkopfs 54 wird dessen Zapfen 55 in die Meßöffnung weiter hinein- oder aus der Meßöffnung 30 weiter herausgeschraubt. Dabei erfolgt eine axiale Lageveränderung des Dichtrings 52 von einer gehäusenahen zu einer gehäusefernen Position.

Zwischen diesen beiden Positionen sind in dem Führungsschaft 51 radial durchgehende Lüftungsöffnungen 59 ausgebildet, über die die Meßöffnung 30 mit dem äußeren Umgebungsbereich verbindbar ist, wenn sich der Dichtring 52 in seiner gehäusefernen Position befindet. Befindet er sich in seiner gehäusenahen Position sperrt er die Verbindung der Meßöffnung 30 mit dem äußeren Umgebungsbereich ab.

Der Zapfen 55 ist mit einer zum Gehäuseinneren hin offenen Grundbohrung 60 versehen, in der ein Anschlagschieber 61 axial verschiebbar angeordnet ist. Der Anschlagschieber 60 weist an seinem einen in die Verbindungsöffnung 29 hineinragenden Ende eine radiale Erweiterung 62 auf, die größer ist als der Querschnitt der Meßöffnung 30. Da die axiale Bewegbarkeit des Anschlagschiebers 61 in der Grundbohrung 60 durch Anschläge 63 begrenzt ist, kommt es bei einer Aufschraubbewegung des Kronenkopfs 54 zu einem Anschlagen der radialen Erweiterung 62 am inneren Mündungsbereich der Meßöffnung 30 und somit zu einer Begrenzung der Aufschraubbewegung des Kronenkopfs 54.

Damit der Anschlagschieber 61 sich normalerweise in seiner am stärksten ausgefahrenen Position befindet und nicht ungewollt die Meßöffnung mit der radialen Erweiterung verschließt, ist der Anschlagschieber 61 von einer vorgespannten am Boden der Grundbohrung 60 abgestützten Druckfeder 64 in Richtung zum Inneren des Uhrgehäuses 12 beaufschlagt.

Wie bereits ausgeführt, dient die in Figur 9 dargestellte Drückerkrone 9 sowohl als Krone zum Verstellen des Tauchzeiteinstellrings 8 als auch als Drücker zum Beaufschlagen des Betätigungsschiebers 42 zum Beaufschlagen der Rastklinke 38. Dazu ist in einer radial durchgehenden Gehäuseöffnung 65 ein Führungsschaft 66 dicht eingesetzt, in dem ein Betätigungszapfen 67 sowohl axial bewegbar als auch verdrehbar geführt angeordnet ist. An seinem nach außen gerichteten Ende ist an dem Betätigungszapfen 67 ein Kronenkopf 68 angeordnet, an dem sich eine den Betätigungszapfen 67 umschließende Druckfeder 73 abstützt, die mit ihrem anderen Ende an einer Stufe 69 der Gehäuseöffnung 65 abgestützt ist. Damit ist der Betätigungszapfen 67 immer in seine radial äußere Lage bewegt vorgespannt. Durch manuelles Drücken auf den Kronenkopf 68 wird mit diesem der Betätigungszapfen 67 in das Uhrgehäuse 12 hineinbewegt, bis der Betätigungszapfen 67 mit seiner Stirnseite 70 den Betätigungsschieber 42 beaufschlagt und von diesem die Rastklinke 38 in Löserichtung verschwenkt ist.

Am in das Uhrgehäuse 12 ragenden Ende des Betätigungszapfens 67 ist weiterhin ein Stellritzel 71 angeordnet, das in eine Zahnreihe 72 eingreift, die sich entlang des Tauchzeiteinstellrings 8 an dessen Unterseite in Umfangsrichtung des Tauchzeiteinstellrings 8 erstreckt. Durch Verdrehen des Kronenkopfs 68 und damit des Betätigungszapfens 67 und des Stellritzels 71 wird die Einstellposition des Tauchzeiteinstellrings 8 verändert.

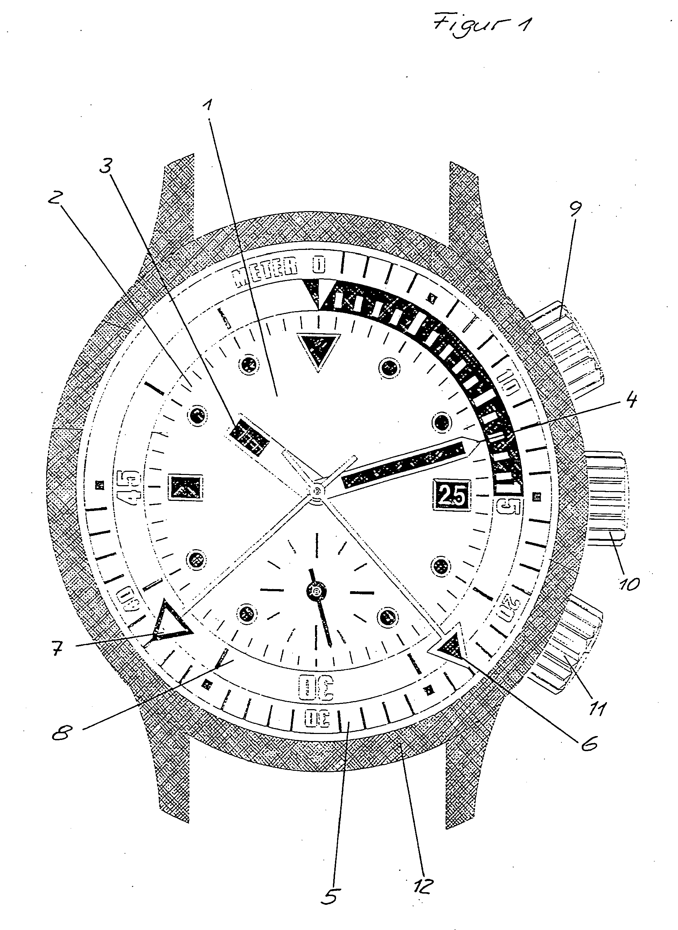

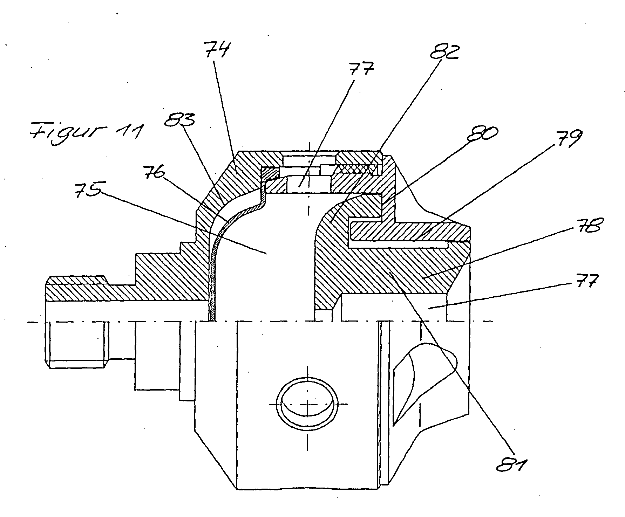

Bei dem Ausführungsbeispiel der Figuren 10 - 12 besitzen das Uhrgehäuse 12, das Uhrwerk, das Tiefenmeßwerk sowie der Ringfederdruckmesser gleichen Aufbau wie bei dem Ausführungsbeispiel der Figuren 1 - 9 und sind daher teilweise nicht dargestellt.

Anstatt der Schraubkrone 11 im Ausführungsbeispiel der Figuren 1 - 9 ist bei dem Ausführungsbeispiel der Figuren 10 - 12 eine Krone 74 in die Gehäuseöffnung 50 eingesetzt, die ebenfalls eine Meßöffnung 30 besitzt.

Die Meßöffnung 30 führt von dem Innenraum der Rohrfeder 19 zu einer im Kopf der Krone 74 ausgebildeten Kammer 75 größeren Durchmessers als der Meßöffnung 30. Die der Mündung der Meßöffnung. 30 gegenüberliegende Wand der Kammer 75 ist eine als Membran 76 ausgebildete bewegliche Wand, deren dem Innenraum der Kammer 75 abgewandte Seite über Belüftungsbohrungen 77 in der Krone 74 und in einem in der Krone 74 verschiebbar geführten Drücker 78 vom Umgebungsdruck beaufschlagt ist.

Der Drücker 78 ist in einer zur Meßöffnung 30 koaxialen Führungsbohrung 79 der Krone 74 verschiebbar geführt, wobei seine Verschiebbarkeit in Volumenvergrößerungsrichtung der Kammer 75 durch einen Anschlag 80 an der Krone 74 begrenzt ist.

Der in die Führungsbohrung 79 hineinragende Schaft 81 des Drückers 78 ist an seiner nach außen gerichteten Stirnseite manuell beaufschlagbar und in das Volumen der Kammer 75 verringernder Richtung verschiebbar.

An seinem der Kammer 75 zugewandten Ende ist der Drücker 78 mit einem Pilzkopf 82 versehen, an dem sich die Membran 76 anlegen und abstützen kann und über den die Membran 76 bei manuellem Beaufschlagen des Drückers 78 in das Volumen der Kammer 75 verringernder Richtung auslenkbar ist.

Der Innenraum der Rohrfeder 19, die Meßöffnung 30 und die Kammer 75 sind blasenfrei mit einem Öl gefüllt.

Bei Beaufschlagung der Außenseite der Membran 76 über die Belüftungsbohrungen 79 mit normalem Umgebungsdruck, befindet sich die

Membran 76 in der in Figur 10 dargestellten Stellung.

Erhöht sich der von außen auf die Membran 76 einwirkende Druck bei einem Tauchgang, so wird dieser erhöhte Druck über die Membran auf das in der Kammer 75 der Meßöffnung 30 und dem Innenraum der Rohrfeder 19 befindliche Öl übertragen, welches wiederum eine Aufweitung der Krümmung der Rohrfeder 19 bewirkt.

Je nach Höhe der Druckbeaufschlagung der Membran 76 weitet sich die Krümmung der Rohrfeder 19 mehr oder weniger auf und führt über das Tiefenmeßwerk 17 zu der entsprechenden Einstellung des Tiefenzeigers 6.

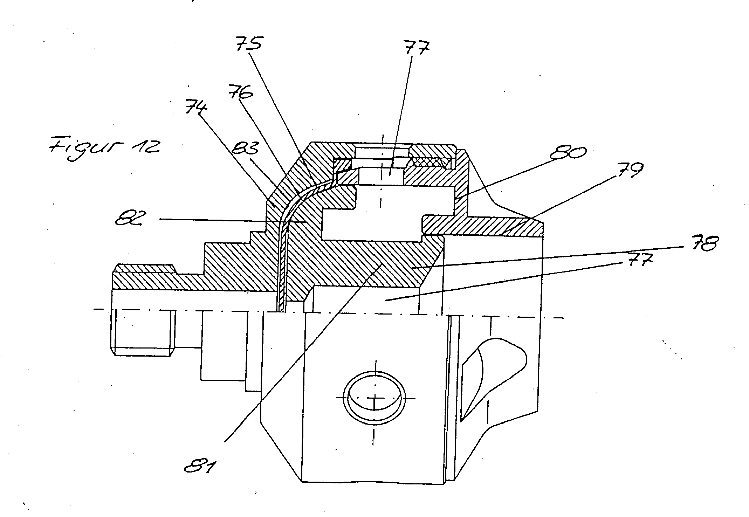

Da sich beim Aufweiten der Rohrfeder 19 das Volumen deren Innenraums vergrößert, bewegt sich die Membran 76 von der in Figur 10 dargestellten Stellung bis maximal in die in Figur 11 dargestellten Stellung, in der sie am Boden 83 der Kammer 75 zur Anlage kommt und selbst bei weiterer

Druckerhöhung nicht weiter ausgelenkt und beschädigt werden kann.

Damit bildet die Verringerung des Volumens der Kammer 75 einen Volumenausgleich für die Volumenvergrößerung des Innenraums der Rohrfeder 19.

Um bei normalem Umgebungsdruck eine Druckbeaufschlagung der Membran 76 und damit der Rohrfeder 19 simulieren zu können, kann die Membran 76 durch manuelle Beaufschlagung des Drückers 78 ebenfalls in Volumen der Kammer 75 verringernder Richtung bewegt werden und entsprechend der Beaufschlagungskraft ein Druckwert vom Tiefenzeiger 6 angezeigt werden.

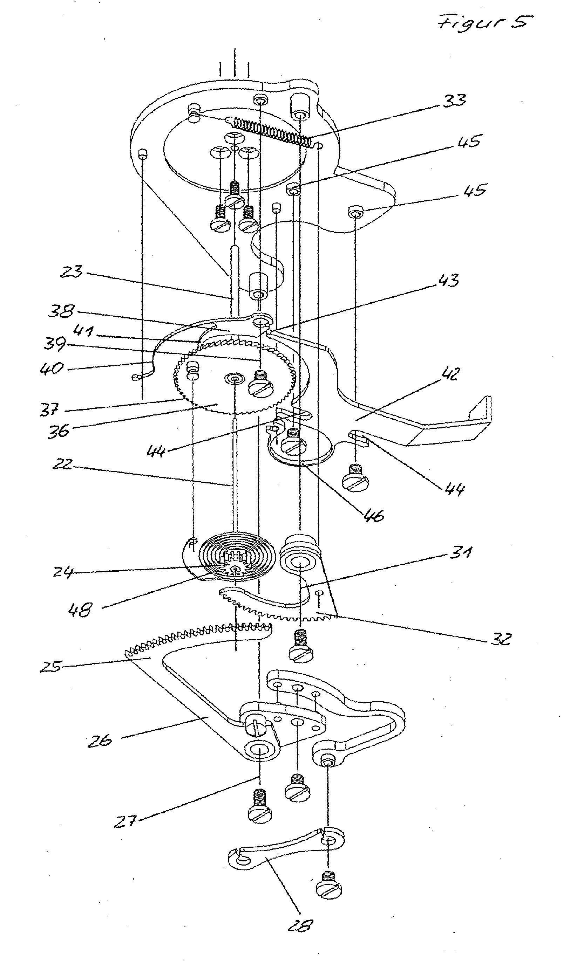

Bei dem Ausführungsbeispiel der Gelenkstange 28, wie sie in den Figuren 4 und 5 dargestellt ist, muß deren Schwanenhalsbereich durch Verbiegen in seiner wirksamen Länge verändert werden, um Fertigungstoleranzen der Rohrfeder 19 auszugleichen. Dies ist sehr aufwendig und ungenau.

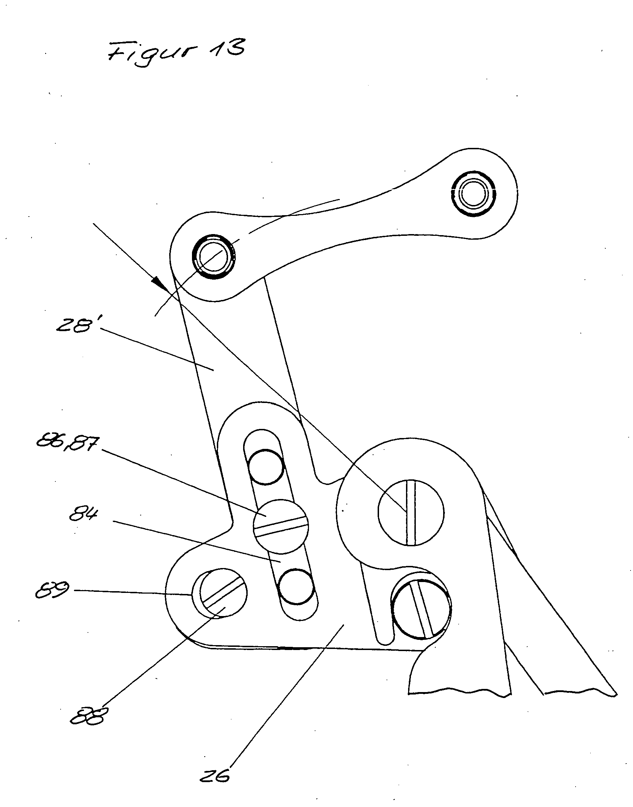

Bei dem in Figur 13 dargestellten Ausführungsbeispiel der Gelenkstange 28' ist diese dadurch längenveränderlich ausgebildet, daß ihre Verbindung mit dem Zahnsegmenthebel 26 in Längserstreckung der Gelenkstange 28' verschiebbar geführt und fixierbar ist. Dazu weist der Zahnsegmenthebel 26 ein Langloch 84 auf, in das zwei Führungszapfen 85 hineinragen, die in Längserstreckung der Gelenkstange 28' an dieser in einem geringeren Abstand voneinander als der Länge des Langlochs 84 angeordnet sind. Zwischen den beiden Führungszapfen 85 ist in der Gelenkstange 28' eine Gewindebohrung ausgebildet. Eine Fixierschraube 86 ragt mit ihrem Schaft durch das Langloch 84 und ist in die Gewindebohrung eingeschraubt. Mit ihrem Schraubenkopf 87 liegt sie im Randbereich des Langlochs 84 auf dem Zahnsegmenthebel 26 auf und verspannt diesen gegen die Gelenkstange 28'.

Zum Verstellen der Länge der Gelenkstange 28' wird die Fixierschraube 86 gelöst, so daß die Gelenkstange 28' durch die in das Langloch 84 ragenden Führungszapfen 85 geführt, relativ zum Zahnsegmenthebel 26 verschoben und durch anschließendes Festschrauben der Fixierschraube 86 fixiert werden kann.

Die Relativverschiebung erfolgt dabei mittels eines parallel zu den Führungszapfen 85 drehbar an der Gelenkstange 28' angeordneten Zapfens, der mit einem Exzenterkopf 88 in eine Bohrung 89 des Zahnsegmenthebels 26 ragt. Die Verdrehung des mit einem Schlitz für einen Schraubendreher versehenen Exzenterkopfs 88 in der Bohrung 89 bewirkt eine feinfühlige Verschiebung des Zahnsegmenthebels 26 relativ zur Gelenkstange 28'.

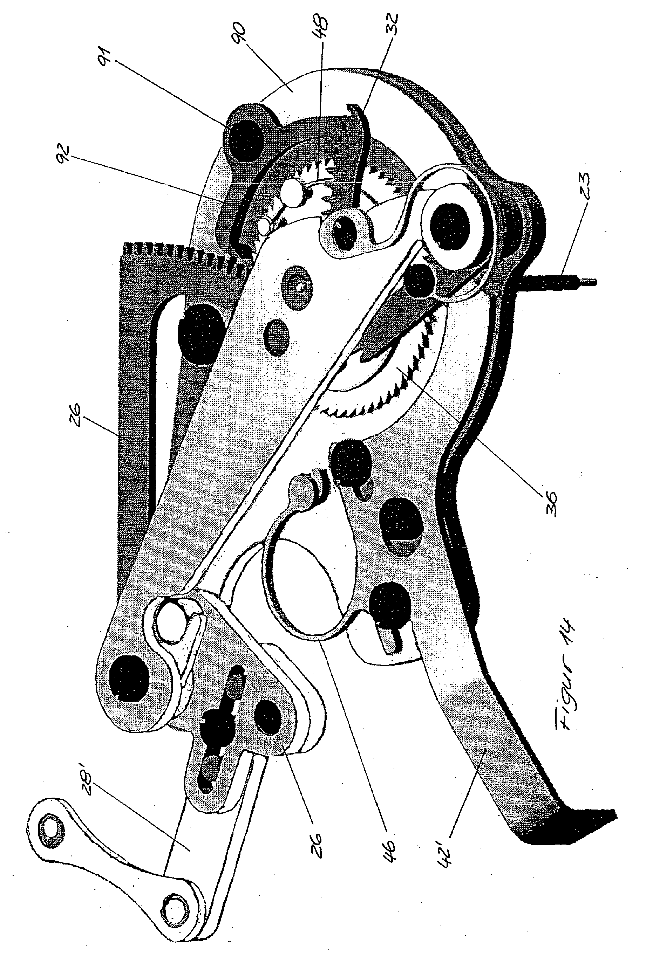

Diese Ausbildung der Gelenkstange 28' ist auch bei dem in Figur 14 dargestellten Ausführungsbeispiel eines Tiefenmeßwerks zu sehen, welches weitgehend dem Tiefenmeßwerk der Figuren 4 und 5 entspricht. Unterschiedlich ist nur die Ausbildung der Rastklinke und deren Beaufschlagung durch den Betätigungsschieber 42'.

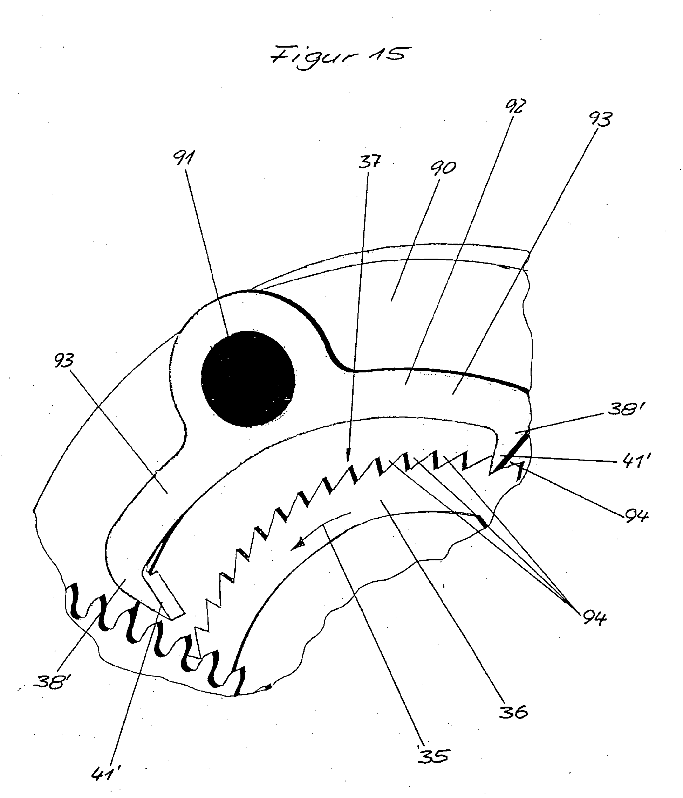

In Figur 14 umschließt der Betätigungsschieber 42' mit einem Arm 90 weitgehend die Rastscheibe 36. Etwa diagonal dem Betätigungsteil des Betätigungsschiebers 42' gegenüberliegend ist an dem Arm 90 eine zur Drehachse der Rastscheibe 36 parallele Schwenkachse 91 angeordnet, auf der ein zweiarmiger Hebel 92 freischwenkbar gelagert ist. An den freien Enden jedes Hebelarms 93 des Hebels 92 ist eine Rastnase 41' einer Rastklinke 38' angeordnet, von denen in der in den Figuren 14 und 15 dargestellten Normalposition des Betätigungsschiebers 42' sich eine Rastklinke 38 immer in einer Zahnlücke 94 der Sägezahnreihe 37 der Rastscheibe 36 befindet. Durch Verdrehen der Rastscheibe 36 in Tiefenrichtung 35 während eines Tauchgangs gleitet die Rastnase 41' der sich in der Zahnlücke 94 befindlichen. Rastklinke 38' entlang der langen Zahnflanke eines Sägezahns und wird so aus der Zahnlücke 94 heraus bewegt. Dies bewirkt ein Verschwenken des Hebels 92 und damit ein Hineinbewegen der anderen Rastklinke 38' in eine Zahnlücke 94. Damit befindet sich eine der Rastklinken 38' immer in einer der Zahnlücken 94 und verhindert beim Auftauchen ein Zurückdrehen der Rastscheibe 36 und des Schleppzeigers 7. Der Taucher kann somit nach einem Tauchgang in Ruhe seine vorher maximal erreichte Tauchtiefe ablesen. Will der Taucher nach Ablesen der maximalen Tauchtiefe den Schleppzeiger 7 wieder auf Null stellen, so braucht er nur den Betätigungsschieber 42' entgegen der Kraft des Federarms 46 in Richtung auf die Rastscheibe 36 zu beaufschlagen. Damit verschiebt sich aber der Arm 90 und damit auch die Schwenkachse 91 und der Hebel 92 von der Rastscheibe 36 so weit weg, daß beide Rastklinken 38' aus den Zahnlücken 94 der Rastscheibe 36 herausbewegt sind. Die Spiralfeder 48 kann dann ungehindert die Rückstellung des Schleppzeigers 7 in die Nullstellung bewirken.

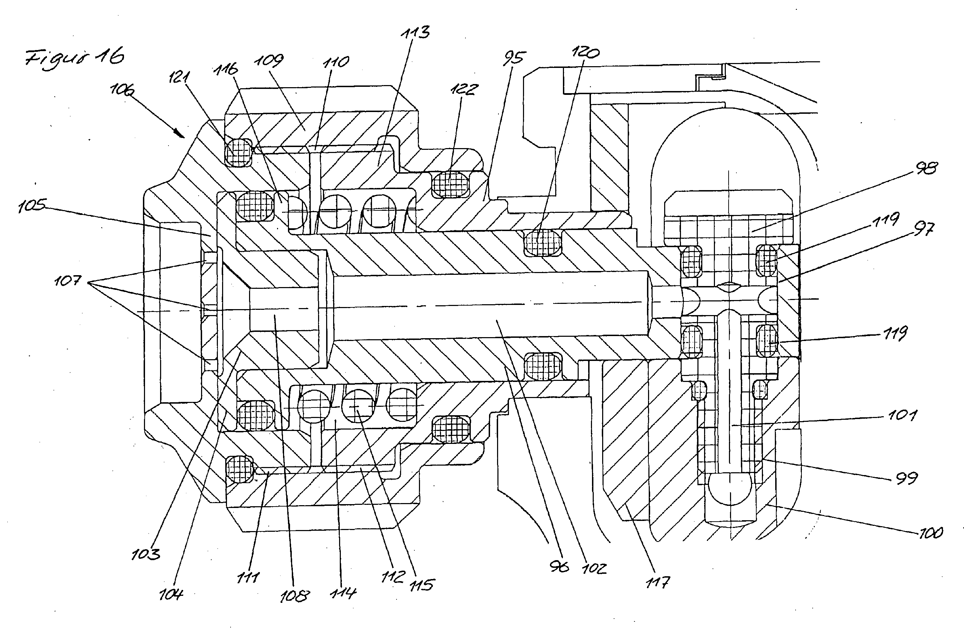

Die in Figur 16 dargestellte Krone weist eine Kronenbuchse 95 auf, die fest im Uhrgehäuse 12 angeordnet ist und von diesem radial nach außen wegragt. In der Durchgangsbohrung der Kronenbuchse 95 ist von einem Dichtring 120 abgedichtet ein Schaft 96 axial verschiebbar angeordnet, dessen in das Uhrgehäuse 12 ragendes Ende eine Querbohrung 97 aufweist. In der Querbohrung 97 ist mit ihrem oberen Ende eine Gelenkhohlschraube 98 derart über Dichtringe 119 dicht eingesetzt, daß der Schaft 96 auf der Gelenkhohlschraube 98 schwenkbar ist. Mit dem unteren Ende ist die Gelenkhohlschraube 98 in eine Gewindebohrung 99 eines Endstücks 100 der Rohrfeder 19 eingeschraubt.

Über den Durchgang 101 der Gelenkhohlschraube 98 ist die durchgehende Axialbohrung 102 des Schafts 96 mit dem Inneren der Rohrfeder 19 verbunden.

An dem dem Uhrgehäuse 12 abgewandten Ende ist die Axialbohrung 102 des Schafts 96 stufenartig erweitert und nimmt eine Gleitbuchse 103 auf. An dem aus der stufenartig erweiterten Axialbohrung 102 herausragenden Ende besitzt die Gleitbuchse 103 eine flanschartige Erweiterung 104, die wiederum axial an einem Deckel 105 einer topfartig ausgebildeten Überwurfmutter 106 abgestützt ist:

Da der Deckel 105 mehrere Durchgangsbohrungen 107 geringen Druchmessers und die Gleitbuchse 103 ebenfalls eine Axialbohrung 108 aufweist, kann bei einem Tauchgang die in der Rohrfeder 19 befindliche Flüssigkeit über die Durchgangsbohrungen 107, die Axialbohrungen 108 und 102 sowie den Durchgang 101 der Gelenkhohlschraube 98 vom Außendruck beaufschlagt werden. Verunreinigungen werden aber durch den geringen Querschnitt der Durchgangsbohrungen 107 weitgehend am Eintritt in die Axialbohrungen 108 und 102 und die Rohrfeder 19 gehindert.

Die Überwurfmutter 106 ist zweiteilig ausgebildet, wobei der sich an den Deckel 105 anschließende hohlzylindrische Teil 109 ein Innengewinde 110 aufweist, mit dessen einem Ende der hohlzylindrische Teil 109 auf ein Außengewinde 111 des Deckels 105 aufgeschraubt ist. Im Verbindungsbereich zwischen Deckel 105 und hohlzylindrischem Teil 109 ist ein Dichtring 121 angeordnet.

An dem anderen Ende ist der hohlzylindrische Teil 109 mit seinem Innengewinde 110 auf ein Außengewinde 112 an einer flanschartigen Erweiterung 113 der Kronenbuchse 95 aufgeschraubt.

Das Innengewinde 110 und die Außengewinde 111 und 112 sind Feingewinde.

Durch Verdrehen der Überwurfmutter 106 auf dem Außengewinde der Kronenbuchse 95 ist über den Deckel 105 und die Gleitbuchse 103 der Schaft 96 in der Kronenbuchse 95 axial verschiebbar einstellbar. Damit ist aber auch das Endstück 100 der Rohrfeder 19 radial zum Uhrgehäuse 12 verstellbar.

Durch diese Verstellung verändert sich aber auch die Position des anderen mit dem Tiefenmeßwerk verbundenen Endes der Rohrfeder 19 und damit auch die Stellung des Tiefenzeigers 6.

Die Position des Tiefenzeigers 6 ist also abhängig von der Position des Endstücks 100 der Rohrfeder 19. Verändert sich die Krümmung der Rohrfeder 19 durch Luftdruckänderungen, so bewegt sich der Tiefenzeiger 6 geringfügig aus seiner Nullstellung entweder über oder unter Null. Dieser Fehler würde bei einem Tauchgang beibehalten werden. Durch Verdrehen der Überwurfmutter 106 kann unmittelbar vor einem Tauchgang der Tiefenzeiger auf exakt Null einjustiert werden, so daß eine Fehlanzeige beim Tauchgang vermieden wird.

Zwischen der flanschartigen Erweiterung 113, der Kronenbuchse 65 und dem Schaft 96 ist ein Ringraum 114 vorhanden, in dem eine den Schaft 96 umschließende Wendelfeder 115 angeordnet ist, die sich mit ihrem einen Ende an der Kronenbuchse 95 und mit ihrem anderen Ende an einer flanschartigen Erweiterung 116 des Schafts 96 abstützt und diesen in Anlage an den Deckel 105 der Überwurfmutter hält.

Damit sind die Flanken des Innengewindes 110 des hohlzylindrischen Teils der Überwurfmutter 106 immer in eine Richtung in Anlage an den Flanken der Außengewinde 111 und 112 gehalten, so daß kein Gewindespiel die Anzeigegenauigkeit des Tiefenzeigers 6 verfälschen kann.

Das freie Ende des hohlzylindrischen Teils 109 hintergreift die flanschartige Erweiterung 113 der Kronenbuchse 95 und bildet so in eine Richtung eine Axialbegrenzung der Schraubbewegung der Überwurfmutter 106. Weiterhin ist zwischen diesem Ende des hohlzylindrischen Teils 109 und der Kronenbuchse 95 ein Dichtring 122 angeordnet.

Der benötigte Verstellweg des Schafts 96 und des Endstücks 100 der Rohrfeder 19 beträgt bei dem Original des vergrößert dargestellten Ausführungsbeispiels 0,3 mm, was eine Zeigerverstellung erzeugt, die einer Wassertiefe von 20 m entspricht.

Durch die gelenkige Verbindung des Schafts 96 mit der Gelenkhohlschraube 98 werden Verspannungen dieser beiden Teile zueinander bei einem Einstell- und einem Meßvorgang eliminiert.

Um eine möglichst leichtgängige Radialverstellung des Endstücks 100 der Rohrfeder 19 bei Verstellung durch den Schaft 96 sicherzustellen, ist das Endstück an einem Ende eines Schwenkarms 117 befestigt, dessen anderes Ende um eine fest am Uhrgehäuse 12 angeordnete, sich parallel zur Längsachse der Gelenkhohlschraube 98 erstreckende Schwenkachse 118 schwenkbar ist. Damit ist eine weitgehend radiale Bewegbarkeit des Endstücks 100 der Rohrfeder 19 im Uhrgehäuse 12 möglich.

## Patentansprüche

1. Uhr, insbesondere Taucheruhr, mit einem in einem Uhrgehäuse angeordneten Uhrwerk, durch das über ein Stundenrohr ein Stundenzeiger, über ein Minutenrohr ein Minutenzeiger und gegebenenfalls ein Sekundenzeiger ein Zifferblatt überstreichend antreibbar sind, sowie mit einer Druckerfassungseinrichtung zum Erfassen des Umgebungsdrucks außerhalb des Uhrgehäuses und einer Anzeige zum Darstellen der erfaßten Druckwerte, wobei im Uhrgehäuse (12) ein mechanischer Druckwandler (19) angeordnet ist, der von dem Umgebungsdruck außerhalb des Uhrgehäuses (12) über eine Meßöffnung (30) beaufschlagbar ist und durch den ein mechanisches Tiefenmeßwerk (17) einer mechanischen Anzeige antreibbar ist, **dadurch gekennzeichnet, daß** die Verbindung der Meßöffnung (30) mit der äußeren Umgebung geöffnet oder verschlossen werden kann.

2. Uhr nach Anspruch 1, **dadurch gekennzeichnet, daß** die Verbindung der Meßöffnung (30) mit der äußeren Umgebung durch eine Schraubkrone (11) manuell geöffnet oder verschlossen werden kann.

3. Uhr nach Anspruch 1, **dadurch gekennzeichnet, daß** eine Verschließeinrichtung der Meßöffnung (30) als Druckminderventil ausgebildet ist, durch das die Meßöffnung (30) bei Überschreitung eines bestimmten Umgebungsdrucks verschließbar ist.

4. Uhr nach einem der vorhergehenden Ansprüche 1 bis 3, **dadurch gekennzeichnet, daß** der mechanische Druckwandler (19) über ein inkompressibles Medium, etwa eine Flüssigkeit, von dem Umgebungsdruck außerhalb des Uhrgehäuses (12) beaufschlagbar ist.

5. Uhr nach Anspruch 4, **dadurch gekennzeichnet, daß** der Innenraum des Druckwandlers (19) über die Meßöffnung (30) mit einer Kammer (75) verbunden und mit dem inkompressiblen Medium gefüllt ist.

6. Uhr nach Anspruch 5, **dadurch gekennzeichnet, daß** eine bewegliche Wand der Kammer (75) durch einen manuell verschiebbaren Drücker (78) das Volumen der Kammer (75) verringernd beaufschlagbar ist, wobei die Verschiebbarkeit des Drückers (78) in Volumenvergrößerungsrichtung der Kammer (75) durch einen Anschlag (80) begrenzt ist und wobei die Kammer (75) und/oder der Drücker (78) in einer Krone (74) angeordnet sind.

7. Uhr nach einem der vorhergehenden Ansprüche, **dadurch gekennzeichnet, daß** der Druckwandler ein Ringfederdruckmesser ist, der eine ringförmige Rohrfeder (19) aufweist, welche ein am Uhrgehäuse (12) befestigtes Ende aufweist, das mit der Meßöffnung (30) verbunden ist, während sein anderes Ende radial frei verschwenkbar ist, wobei durch die Schwenkbewegung des freien Endes eine Anzeigewelle (22) des Tiefenmeßwerks (17) drehbar antreibbar ist.

8. Uhr nach Anspruch 7, **dadurch gekennzeichnet, daß** das freie Ende des Druckwandlers (19) mit der Meßöffnung (30) verbunden ist.

9. Uhr nach einem der vorhergehenden Ansprüche 7 bis 8, **dadurch gekennzeichnet, daß** das am Uhrgehäuse (12) befestigte Ende des Druckwandlers (19) relativ zum Uhrgehäuse (12) radial verstellbar ist.

10. Uhr nach Anspruch 9, **dadurch gekennzeichnet, daß** das Ende der Rohrfeder (19) über einen radial aus dem Uhrgehäuse (12) ragenden Schaft (96) am Uhrgehäuse (12) befestigt ist, wobei der Schaft (96) in Richtung seiner Längserstreckung verstellbar ist.

11. Uhr nach Anspruch 10, **dadurch gekennzeichnet, daß** der Schaft (96) in einer mit dem Uhrgehäuse (12) fest verbundenen Kronenbuchse (95) verschiebbar geführt ist, die mit einem Gewinde versehen ist, auf dem eine Überwurfmutter (106) angeordnet ist, an der das freie Ende des Schafts (96) abgestützt ist.

12. Uhr nach einem der Ansprüche 10 oder 11, **dadurch gekennzeichnet, daß** der Schaft (96) axial gegen die Überwurfmutter (106) federbeaufschlagt ist.

13. Uhr nach einem der Ansprüche 10 bis 12, **dadurch gekennzeichnet, daß** der Schaft (96) eine Axialbohrung (102) besitzt, deren eines Ende mit der Umgebung und deren anderes Ende mit dem Inneren der Rohrfeder (19) verbunden ist.

14. Uhr nach einem der Ansprüche 11 bis 13, **dadurch gekennzeichnet, daß** die Überwurfmutter (106) topfförmig ausgebildet ist und einen Deckel (105) aufweist, der den zur Umgebung gerichteten Mündungsbereich der Axialbohrung (102) des Schafts (96) abdeckt und in dem eine oder mehrere Durchgangsbohrungen(107) geringen Querschnitts ausgebildet sind.

15. Uhr nach einem der Ansprüche 13 oder 14, **dadurch gekennzeichnet, daß** das rohrfederseitige Ende des Schafts (96) mit einer Querbohrung (97) auf einer Gelenkhohlschraube (98) schwenkbar gelagert ist, wobei die Axialbohrung (102) des Schafts (96) in eine Axialbohrung (101) der Gelenkhohlschraube (98) und die Axialbohrung (101) der fest mit der Rohrfeder (19) verbundenen Gelenkhohlschraube (98) in die Rohrfeder (19) mündet.

16. Uhr nach Anspruch 15, **dadurch gekennzeichnet, daß** die Rohrfeder (19) im Bereich der Gelenkhohlschraube (98) an einem Endes eines Schwenkarms (117) befestigt ist, dessen anderes Ende um eine fest am Uhrgehäuse (12) angeordnete, sich parallel zur Längsachse der Gelenkhohlschraube (98) erstreckende Schwenkachse (118) schwenkbar ist.

17. Uhr nach einem der vorhergehenden Ansprüche 7 bis 16, **dadurch gekennzeichnet, daß** die Rohrfeder (19) das Uhrwerk (16) umschließend im Uhrgehäuse (12) angeordnet ist.

18. Uhr nach Anspruch 17, **dadurch gekennzeichnet, daß** die Rohrfeder (19) mit Spiel in einer Ringkammer (18) des Uhrgehäuses (12) angeordnet ist, wobei die Wände (20, 21) der Ringkammer (18) Anschläge bilden, welche die radiale Verschwenkbarkeit des freien Endes der Rohrfeder (19) begrenzen.

19. Uhr nach einem der vorangehenden Ansprüche 8 bis 18, **dadurch gekennzeichnet, daß** das freie Ende des Druckwandlers (19) über eine Gelenkstange (28) mit einem Zahnsegmenthebel (26) eines Zahnsegmentes (25) gelenkig verbunden ist, durch das ein Antriebsritzel (24) der Anzeigewelle (22) drehbar antreibbar ist, wobei die Gelenkstange (28) längenveränderlich einstellbar ist.

20. Uhr nach Anspruch 19, **dadurch gekennzeichnet, daß** die Verbindung der Gelenkstange (28') mit dem Zahnsegmenthebel (26) in Längserstreckung der Gelenkstange (28) verschiebbar geführt und fixierbar ist.

21. Uhr nach Anspruch 20, **dadurch gekennzeichnet, daß** der Zahnsegmenthebel (26) ein Langloch (84) aufweist, in das zwei Führungszapfen (85) hineinragen, die in Längserstreckung der Gelenkstange (28') in einem geringeren Abstand als der Länge des Langlochs (84) voneinander an der Gelenkstange (28') angeordnet sind, wobei eine Fixierschraube (86) das Langloch (84) durchragend in ein Gewindeloch im Zahnsegmenthebel (26) einschraubbar sowie mit ihrem Schraubenkopf der Zahnsegmenthebel (26) gegen die Gelenkstange (28') pressbar ist, und daß ein parallel zu den Führungszapfen (85) am Zahnsegmenthebel (26) drehbar angeordneter Zapfen mit einem Exzenterkopf (88) in eine Bohrung des Gelenkhebels (28') ragt.

22. Uhr nach Anspruch 19, **dadurch gekennzeichnet, daß** ein schwenkbar angeordnetes federbeaufschlagtes Rückstellzahnsegment (32) in das Antriebsritzel greift, durch das das Antriebsritzel (24) in eine Tiefenrichtung (35) drehbar bewegbar beaufschlagbar ist.

23. Uhr nach einem der vorhergehenden Ansprüche, **dadurch gekennzeichnet, daß** das mechanische Tiefenmeßwerk (17) auf der dem Zifferblatt (1) entgegengesetzten, durch einen öffenbaren Gehäuseboden (14) verschließbaren Bodenseite des Uhrgehäuses (12) angeordnet ist.

24. Uhr nach Anspruch 23, **dadurch gekennzeichnet, daß** die Anzeigewelle (22) durch das Uhrwerk (16) hindurchragt.

25. Uhr nach einem der vorhergehenden Ansprüche, **dadurch gekennzeichnet, daß** das mechanische Tiefenmeßwerk (17) einen Tiefenzeiger (6) und einen die Maximaltiefe eines Tauchganges anzeigenden Schleppzeiger (7) antreibt, wobei der Tiefenzeiger (6) einen Mitnehmer (34) aufweist, mit dem der Tiefenzeiger (6) am Schleppzeiger (7) anschlagbar und dieser in Tiefenrichtung (35) bewegbar ist, und wobei die Schwenkbewegung des Schleppzeigers (7) entgegen der Tiefenrichtung (35) durch eine lösbare Sperre sperrbar ist.

26. Uhr, insbesondere Taucheruhr, mit einem in einem Uhrgehäuse angeordneten Uhrwerk, durch das über ein Stundenrohr ein Stundenzeiger, über ein Minutenrohr ein Minutenzeiger und gegebenenfalls ein Sekundenzeiger ein Zifferblatt überstreichend antreibbar sind, sowie mit einer Druckerfassungseinrichtung zum Erfassen des Umgebungsdrucks außerhalb des Uhrgehäuses und einer Anzeige zum Darstellen der erfaßten Druckwerte, **dadurch gekennzeichnet, daß** im Uhrgehäuse (12) ein mechanischer Druckwandler angeordnet ist, der von dem Umgebungsdruck außerhalb des Uhrgehäuses (12) beaufschlagbar ist und durch den ein mechanisches Tiefenmeßwerk (17) einer mechanischen Anzeige antreibbar ist.

27. Uhr nach Anspruch 26 **dadurch gekennzeichnet, daß** das mechanische Tiefenmeßwerk (17) eine Anzeigewelle (22) aufweist, die von dem Druckwandler drehbar antreibbar ist und einen Tiefenzeiger (6) trägt, von dem eine Tiefenskala (5) überstreichbar ist.

28. Uhr nach Anspruch 27 **dadurch gekennzeichnet, daß** die Anzeigewelle (22) koaxial zum Stundenrohr und Minutenrohr und die Tiefenskala auf dem Zifferblatt angeordnet ist.

29. Uhr nach Anspruch 28 **dadurch gekennzeichnet, daß** die Skalenteilung der Tiefenskala (5) der Skalenteilung der Minutenskala (2) entspricht.

30. Uhr nach einem der vorhergehenden Ansprüche, **dadurch gekennzeichnet, daß** die Anzeigewelle (22) das Stunden- und Minutenrohr koaxial durchragt.

31. Uhr nach einem der vorhergehenden Ansprüche, **dadurch gekennzeichnet, daß** der Druckwandler über eine Meßöffnung mit der Umgebung verbunden ist.

32. Uhr nach einem der vorhergehenden Ansprüche 26 bis 30 **dadurch gekennzeichnet, daß** eine Meßöffnung (30) im Uhrgehäuse (12) zur Verbindung des Druckwandlers mit der Umgebung manuell verschließbar ausgebildet ist.

33. Uhr nach Anspruch 32 **dadurch gekennzeichnet, daß** eine Verschließeinrichtung der Meßöffnung als Druckminderventil ausgebildet ist, durch das die Meßöffnung bei Überschreitung eines bestimmten Umgebungsdrucks verschließbar ist.

34. Uhr nach Anspruch 32 **dadurch gekennzeichnet daß** die Meßöffnung (30) durch eine Schraubkrone (11) manuell verschließbar ist.

35. Uhr nach einem der Ansprüche 26 bis 30 **dadurch gekennzeichnet, daß** der mechanische Druckwandler über ein inkompressibles Medium von dem Umgebungsdruck außerttalb des Uhrgehäuses (12) beaufschlagbar ist.

36. Uhr nach Anspruch 35 **dadurch gekennzeichnet, daß** das inkompressible Medium eine Flüssigkeit ist.

37. Uhr nach Anspruch 36 **dadurch gekennzeichnet, daß** die Flüssigkeit Wasser oder Öl ist.

38. Uhr nach einem der Ansprüche 35 bis 37 **dadurch gekennzeichnet, daß** das inkompressible Medium über eine bewegliche Wand vom Umgebungsdruck beaufschlagbar ist.

39. Uhr nach Anspruch 37 **dadurch gekennzeichnet, daß** die bewegliche Wand eine Membran (76) ist.

40. Uhr nach einem der Ansprcrche 38 und 39 **dadurch gekennzeichnet, daß** im Uhrgehäuse (12) eine Meßöffnung (30) zur Beaufschlagung des Druckmessers mit dem Umgebungsdruck ausgebildet ist, die zu einer mit dem inkompressiblen Medium gefüllten Kammer (75) führt, deren eine Wand die vom Umgebungsdruck beaufschlagbare bewegliche Wand ist.

41. Uhr nach einem der vorhergehenden Ansprüche, **dadurch gekennzeichnet, daß** der Druckwandler ein Ringfederdruckmesser mit einer ringförmigen Rohrfeder (19) ist, deren eines Ende am Uhrgehäuse (12) befestigt und mit der Meßöffnung (30) verbunden ist und von derern radial frei verschwenkbaren anderen Ende das Tiefenmeßwerk (17) bewegbar antreibbar ist, durch das die Schwenkbewegung des freien Endes der Rohrfeder (19) in eine die Anzeigewelle (22) drehbar antreibbare Bewegung übertragbar ist.

42. Uhr nach Anspruch 41 **dadurch gekennzeichnet, daß** die radiale Verschwenkbarkeit des freien Endes der Rohrfeder (19) durch Anschläge begrenzt ist.

43. Uhr nach Anspruch 42 **dadurch gekennzeichnet, daß** die Rohrfeder (19) das Uhrwerk (16) umschließend im Uhrgehäuse (12) angeordnet ist.

44. Uhr nach einem der Ansprüche 42 und 43 **dadurch gekennzeichnet, daß** die Rohrfeder (19) mit Spiel in einer Ringkammer (18) des Uhrgehäuses (12) angeordnet ist, wobei die Wände (20, 21) der Ringkammer (18) die Anschläge bilden.

45. Uhr nach einem der Ansprüche 41 bis 43 **dadurch gekennzeichnet, daß** der Innenraum der Rohrfeder (19) über die Meßöffnung (30) mit der Kammer (75) verbunden und mit dem inkompressiblen Medium gefüllt ist.

46. Uhr nach Anspruch 45 **dadurch gekennzeichnet, daß** die bewegliche Wand durch einen manuell verschiebbaren Drücker (78) das Volumen der Kammer (75) verringernd beaufschlagbar ist.

47. Uhr nach Anspruch 46 **dadurch gekennzeichnet, daß** die Verschiebbarkeit des Drückers (78) in Volumenvergrößerungsrichtung der Kammer (75) durch einen Anschlag (80) begrenzt ist.

48. Uhr nach einem der Ansprüche 45 bis 47 **dadurch gekennzeichnet, daß** die Kammer (75) und/oder der Drücker (78) in einer Krone (74) angeordnet sind.

49. Uhr nach einem der vorhergehenden Ansprüche, **dadurch gekennzeichnet, daß** das am Uhrgehäuse (12) befestigte Ende der Rohrfeder (19) radial verstellbar ist.

50. Uhr nach Anspruch 49 **dadurch gekennzeichnet, daß** das Ende der Rohrfeder (19) über einen radial aus dem Uhrgehäuse (12) ragenden Schaft (96) am Uhrgehäuse (12) befestigt ist, wobei der Schaft (96) in Richtung seiner Längserstreckung verstellbar ist.

51. Uhr nach Anspruch 50 **dadurch gekennzeichnet, daß** der Schaft (96) in einer mit dem Uhrgehäuse (12) fest verbundenen Kronenbuchse (95) verschiebbar geführt ist, die mit einem Gewinde versehen ist, auf dem eine Überwurfmutter (106) angeordnet ist, an der das freie Ende des Schafts (96) abgestützt ist.

52. Uhr nach Anspruch 51 , **dadurch gekennzeichnet, daß** das Gewinde ein Feingewinde ist.

53. Uhr nach einem der Ansprüche 50 bis 52 **dadurch gekennzeichnet, daß** der Schaft (96) axial gegen die Überwurfmutter (106) federbeaufschlagt ist.

54. Uhr nach einem der Ansprüche 50 bis 53 **dadurch gekennzeichnet, daß** der Schaft (96) eine Axialbohrung (102) besitzt, deren eines Ende mit der Umgebung und deren anderes Ende mit dem Inneren der Rohrfeder (19) verbunden ist.

55. Uhr nach einem der Ansprüche 51 bis 54 **dadurch gekennzeichnet, daß** die Überwurfmutter (106) topfförmig ausgebildet ist und einen Deckel (105) aufweist, der den zur Umgebung gerichteten Mündungsbereich der Axialbohrung (102) des Schafts (96) abdeckt und in dem eine oder mehrere Durchgangsbohrungen(107) geringen Querschnitts ausgebildet sind.

56. Uhr nach einem der Ansprüche 50 bis 55 **dadurch gekennzeichnet, daß** das rohrfederseitige Ende des Schafts (96) mit einer Querbohrung (97) auf einer Gelenkhohlschraube (98) schwenkbar gelagert ist, wobei die Axialbohrung (102) des Schafts (96) in eine Axialbohrung (101) der Gelenkhohlschraube (98) und die Axialbohrung (101) der fest mit der Rohrfeder (19) verbundenen Gelenkhohlschraube (98) in die Rohrfeder (19) mündet.

57. Uhr nach Anspruch 56 **dadurch gekennzeichnet, daß** die Rohrfeder (19) im Bereich der Gelenkhohlschraube (98) an einem Endes eines Schwenkarms (117) befestigt ist, dessen anderes Ende um eine fest am Uhrgehäuse (12) angeordnete, sich parallel zur Längsachse der Gelenkhohlschraube (98) erstreckende Schwenkachse (118) schwenkbar ist.

58. Uhr nach einem der vorhergehenden Ansprüche, **dadurch gekennzeichnet, daß** das mechanische Tiefenmeßwerk (17) auf der dem Zifferblatt (1) entgegengesetzten, durch einen öffenbaren Gehäuseboden (14) verschließbaren Bodenseite des Uhrgehäuses (12) angeordnet ist.

59. Uhr nach Anspruch 58 **dadurch gekennzeichnet, daß** die Anzeigewelle (22) durch das Uhrwerk (16) hindurchragt.

60. Uhr nach einem der Ansprüche 41 bis 59 **dadurch gekennzeichnet, daß** das freie Ende der Rohrfeder (19) über eine Gelenkstange (28) mit einem Zahnsegmenthebel (26) eines Zahnsegmentes (25) gelenkig verbunden ist, durch das ein Antriebsritzel (24) der Anzeigewelle (22) drehbar antreibbar ist.

61. Uhr nach Anspruch 60 **dadurch gekennzeichnet daß** die Gelenkstange (28, 28') mit ihrem einen Ende am freien Ende der Rohrfeder (19) und mit ihrem anderen Ende am freien Ende des Zahnsegmenthebels (26) angelenkt ist.

62. Uhr nach einem der Ansprüche 60 bis 61 **dadurch gekennzeichnet, daß** die Gelenkstange (28') längenveränderlich einstellbar ist.

63. Uhr nach Anspruch 62 **dadurch gekennzeichnet, daß** die Verbindung der Gelenkstange (28') mit dem Zahnsegmenthebel (26) in Längserstreckung der Gelenkstange (28') verschiebbar geführt und fixierbar ist.

64. Uhr nach Anspruch 63 **dadurch gekennzeichnet, daß** der Zahnsegmenthebel (26) ein Langloch (84) aufweist, in das zwei Führungszapfen (85) hineinragen, die in Längserstreckung der Gelenkstange (28') in einem geringeren Abstand als der Länge des Langlochs (84) voneinander an der Gelenkstange (28') angeordnet sind, wobei eine Fixierschraube (86) das Langloch (84) durchragend in ein Gewindeloch im Zahnsegmenthebel (26) einschraubbar sowie mit ihrem Schraubenkopf der Zahnsegmenthebel (26) gegen die Gelenkstange (28') pressbar ist.

65. Uhr nach Anspruch 64 **dadurch gekennzeichnet, daß** ein parallel zu den Führungszapfen (85) am Zahnsegmenthebel (26) drehbar angeordneter Zapfen mit einem Exzenterkopf (88) in eine Bohrung des Gelenkhebels (28') ragt.

66. Uhr nach Anspruch 60 **dadurch gekennzeichnet, daß** ein schwenkbar angeordnetes federbeaufschlagtes fiücksteflzahnsegment (32) in das Antriebsritzel greift, durch das das Antriebsritzel (24) in der Tiefenrichtung (35) drehbar bewegbar beaufschlagbar ist.

67. Uhr nach einem der vorhergehenden Ansprüche, **dadurch gekennzeichnet, daß** ein die Maximaltiefe eines Tauchganges anzeigender Schleppzeiger (7) durch den Druckmesser oder das Tiefenmeßwerk (17) oder den Tiefenzeiger (6) in Tiefenrichtung (35) schwenkbar antreibbar ist.

68. Uhr nach Anspruch 67 **dadurch gekennzeichnet, daß** der Tiefenzeiger (6) einen Mitnehmer (34) aufweist, mit dem der Tiefenzeiger (6) am Schleppzeiger (7) anschlagbar und diesen in Tiefenrichtung (35) bewegbar ist.

69. Uhr nach einem der Ansprüche 67 und 68 **dadurch gekennzeichnet, daß** der Schleppzeiger (7) um eine zur Drehachse des Tiefenzeigers (6) koaxiale Achse schwenkbar antreibbar ist.

70. Uhr nach Anspruch 69 **dadurch gekennzeichnet, daß** der Schleppzeiger (7) auf einer Schleppzeigerwelle oder einem die Anzeigewelle (22) umschliessenden Schleppzeigerrohr (23) angeordnet ist.

71. Uhr nach einem der Ansprüche 67 bis 70, **dadurch gekennzeichnet, dass** die Schwenkbewegung des Schleppzeigers (7) entgegen der Tiefenrichtung (35) durch eine lösbare Sperre sperrbar ist.

72. Uhr nach Anspruch 71, **dadurch gekennzeichnet, dass** die Schwenkbewegung des Schleppzeigers (7) durch eine Klinkensperre sperrbar ist.

73. Uhr nach Anspruch 72, **dadurch gekennzeichnet, dass** die Schleppzeigerwelle oder das Schleppzeigerrohr (23) eine Rastscheibe (36) mit einer radial umlaufend angeordneten Zahnreihe (37) aufweist, in deren Zahnlücken eine Rastklinke (38) entgegen der Tiefenrichtung (35) sperrend eingreifbar ist.

74. Uhr nach Anspruch 73, **dadurch gekennzeichnet, dass** die Rastscheibe (36) an ihrem radial umlaufenden Rand mit einer Sägezahnreihe (37) ausgebildet ist, deren Zähne entgegen der Tiefendrehrichtung des Schleppzeigers (7) gerichtet sind.

75. Uhr nach einem der Ansprüche 73 und 74, **dadurch gekennzeichnet, dass** die Rastklinke um eine Schwenkachse (39) schwenkbar ist.

76. Uhr nach einem der Ansprüche 73 bis 75, **dadurch gekennzeichnet, dass** die Rastklinke in Entsperrichtung manuell beaufschlagbar ist.

77. Uhr nach Anspruch 76, **dadurch gekennzeichnet, dass** die Rastklinke (38) von einem Betätigungsschieber (42) in Entsperrichtung beaufschlagbar ist, der mit seinem einen Ende manuell beaufschlagbar aus dem Uhrgehäuse (12) ragt oder durch einen Drücker (9) manuell beaufschlagbar ist.

78. Uhr nach Anspruch 77 **dadurch gekennzeichnet, daß** der Entsperrschieber (42) entgegen der Beaufschlagungsrichtung der Rastklinke (38) federbeaufschlagt ist.

79. Uhr nach einem der vorhergehenden Ansprüche, **dadurch gekennzeichnet, daß** der Schleppzeiger (7) federnd entgegen der Tiefenrichtung (35) gegen den Tiefenzeiger (6) vorgespannt ist.

80. Uhr nach Anspruch 79 **dadurch gekennzeichnet, daß** eine die Anzeigewelle (22) umschließende vorgespannte Spiralfeder (48) mit ihrem einen Ende an der Anzeigewelle (22) und mit ihrem anderen Ende an der Schleppzeigerwelle oder dem Schleppzeigerrohr (22) oder der Rastscheibe (36) fest angeordnet ist.

81. Uhr nach einem der Ansprüche 71 bis 80 **dadurch gekennzeichnet, daß** an jedem Hebelarm (93) eines frei um eine zur Drehachse der Rastscheibe (36) parallele Schwenkachse (91) schwenkbaren zweiarmigen Hebels (92) in Umfangsrichtung der Rastscheibe (36) im Abstand voneinander jeweils eine Rastklinke (38') angeordnet ist, wobei bei Drehung der Rastscheibe (36) in Tiefenrichtung (35) die Rastnase (41')der einen Rastklinke (38') entlang einer Zahnflanke gleitend aus einer Zahnlücke (94) der Sägezahnreihe (37) herausbewegbar und **dadurch** der zweiarmige Hebel (92) derart schwenkbar ist, daß dabei die Rastnase (41') der anderen Rastklinke (38') in eine Zahnlücke (94) der Sägezahnreihe (37) hineinbewegbar ist.

82. Uhr nach Anspruch 81 **dadurch gekennzeichnet, daß** der Betätigungsschieber (42') etwa radial zur Drehachse der Rastscheibe (36) verschiebbar geführt ist und die Schwenkachse (91) des zweiarmigen Hebels (92) trägt.

83. Uhr nach einem der Ansprüche 73 bis 80 **dadurch gekennzeichnet, daß** die Rastklinke (38) unter fedemder Vorspannung in die Zahnlücken eingreifbar ist.
